# EUROPÄISCHE PATENTSCHRIFT

(11) **EP 0 501 014 B1**
(45) Veröffentlichungstag und Bekanntmachung des Hinweises auf die Patenterteilung: **03.07.1996**
(21) Anmeldenummer: 91118013.1
(22) Anmeldetag: 23.10.1991
(51) Int. Cl.: B60Q 11/00

(54) **Schaltungsanordnung für ein Zugfahrzeug**
Circuit arrangement for a towing vehicle
Circuit pour véhicule tracteur

(30) Priorität: 27.02.1991 DE 4106166; 11.04.1991 DE 4111779
(43) Veröffentlichungstag der Anmeldung: 02.09.1992
(73) Patentinhaber: Gebhard, Angela Barbara, D-76316 Malsch (DE)
(72) Erfinder: Gebhard, Dietrich, verstorben (DE)
(74) Vertreter: Witte, Alexander, Dr.-Ing.

(56) Entgegenhaltungen:
- DE-A- 3 531 560
- DE-A- 3 724 916
- FR-A- 2 181 422
- GB-A- 2 215 924
- US-A- 4 207 553

## Beschreibung

Die Erfindung betrifft eine Schaltungsanordnung für ein Zugfahrzeug eines aus dem Zugfahrzeug und einem Hänger bestehenden Wagenzuges, wobei das Zugfahrzeug einen Blinkgeber und einen Fahrtrichtungsschalter zum Betreiben seiner Blinklichtanlage aufweist, die über die Schaltungsanordnung mit einer Blinklichtanlage des Hängers verbindbar ist, und wobei ferner der Blinkgeber derart zum Betreiben von zumindest zwei Lampen je Fahrtrichtung ausgelegt ist, daß er bei einem Leerlaufzustand zumindest einer der durch den Fahrtrichtungsschalter jeweils auszuwählenden Lampen einen solchen Fehlerzustand erkennt und dies einem Fahrzeugführer anzeigt, wobei die Schaltungsanordnung zum Erfassen eines Fehlerzustandes einer von dem Fahrtrichtungsschalter ausgewählten Lampe der Blinklichtanlage des Hängers ausgelegt ist und dem Blinkgeber den Leerlaufzustand einer von dem Fahrtrichtungsschalter ausgewählten Lampe der Blinklichtanlage des Hängers als Fehlerzustand übermittelt.

Eine derartige Schaltungsanordnung ist aus der DE-A-3 531 560 bekannt.

Bei der bekannten Schaltungsanordnung sind die Lampen des Hängers parallel zu den Lampen der Blinklichtanlage des Zugfahrzeuges geschaltet. Mittels einer komplexen Überwachungsanlage werden die beiden zusammengeschalteten Blinklichtanlagen von Zugfahrzeug und Hänger überwacht. Als Ergebnis dieser Überwachung werden zwei Kontrolleuchten angesteuert, die je nachdem, ob Fahrzeug- oder Hänger-Stromkreis in Ordnung oder defekt sind, bzw. ob der Hänger angeschaltet ist oder nicht, in unterschiedlicher Kombination angesteuert werden. Diese Druckschrift schlägt also vor, die Lampen der Blinklichtanlage des Hängers parallel zu denen der Blinklichtanlage des Zugfahrzeuges zu schalten und den Blinkgeber entsprechend zu modifizieren, was mit den nachstehend im Zusammenhang mit weiteren, ebenfalls bekannten Schaltungsanordnungen beschriebenen Nachteilen verbunden ist.

Derartige weitere Schaltungsanordnungen sind aus der Praxis bekannt und dienen dazu, die elektrische Anlage eines Hängers mit der elektrischen Anlage eines Zugfahrzeuges zu verbinden.

Die in Zugfahrzeugen eingebauten Blinkgeber sind dazu ausgelegt, je Fahrtrichtung z.B. zwei Lampen zu treiben und beim Ausfall einer der beiden Lampen, also bei einem Leerlaufzustand beispielsweise durch Glühfadenbruch, durch eine veränderte Blinkfrequenz diesen Fehlerzustand dem Fahrzeugführer anzuzeigen. Wenn beim Nachrüsten eines Zugfahrzeuges auf Hängerbetrieb die bekannte Schaltungsanordnung in das Zugfahrzeug eingebaut wird, muß ebenfalls ein neuer Blinkgeber installiert werden, der in diesem Beispiel zum Betreiben von drei Lampen je Fahrtrichtung ausgelegt ist. Bei den Blinklichtanlagen sind nämlich sämtliche Lampen einer Fahrtrichtung zueinander parallel geschaltet, so daß durch die zusätzliche Lampe je Fahrtrichtung durch den Hänger ein veränderter Strombedarf auftritt, wodurch der zum Betreiben von z.B. zwei Lampen je Fahrtrichtung ausgelegte Blinkgeber nicht mehr zwischen fehlerfreiem und fehlerbehaftetem Betrieb unterscheiden kann. Da dies jedoch für die Verkehrssicherheit erforderlich ist, muß - wie gesagt - ein neuer Blinkgeber in das Zugfahrzeug eingebaut werden.

Die mit dem Einbau erforderlichen Montagearbeiten sind zeitaufwendig und daher kostspielig.

Auf das Nachrüsten kann jedoch nicht verzichtet werden, da aus Sicherheitsgründen der Fahrzeugführer auch darüber informiert sein muß, ob eine Lampe der Blinklichtanlage des Hängers ausgefallen ist.

Ferner ist aus der EP-A-0 129 221 eine Schaltungsanordnung bekannt, bei der die von den Lampen des Zugfahrzeuges abgegriffenen Signalspannungen unmittelbar mit den Anschlüssen einer Steckdose verbunden sind, über die die Lampen des Hängers zu den entsprechenden Lampen des Zugfahrzeuges parallel geschaltet sind. Diese Schaltungsanordnung hat zum einen den bereits diskutierten Nachteil, daß nämlich ein neuer Blinkgeber in das Zugfahrzeug eingebaut werden muß, um bei drei Lampen je Fahrtrichtung sicher das Ausfallen einer der drei Lampen zu erkennen.

Wenn die Lampen des Hängers nicht über eigene Sicherungen abgesichert sind, ergibt sich bei dieser Schaltungsanordnung der weitere Nachteil, daß die zugeordnete Lampe des Zugfahrzeuges mit ausfällt, wenn in einer Lampe des Hängers ein Kurzschluß vorliegt. In der Regel wird durch einen solchen Kurzschluß die Sicherung durchbrennen, die in Reihe mit der Lampe des Zugfahrzeuges geschaltet ist.

Eine Absicherung der Lampen des Hängers durch eigene Sicherungen ist insofern problematisch, als die bekannte Schaltungsanordnung häufig erst nachträglich in das Zugfahrzeug eingebaut wird, um beispielsweise einen PKW als Zugfahrzeug für einen Wohnwagen herzurichten. Da für die nachträglich einzubauenden Sicherungen keine Halterung in dem Zugfahrzeug vorgesehen ist, werden die Sicherungen von Fall zu Fall an unterschiedlichen Stellen in dem Zugfahrzeug zu finden sein. Dies kann im Fehlerfalle zu einer langwierigen Suche führen.

Bei moderneren Zugfahrzeugen werden darüberhinaus die Lampen der Beleuchtungs- und Signalanlage von einer Sicherungsschaltung in Form einer Lampentestüberwachung überwacht, die bereits bei geringen Abweichungen des Lampenstromes von einem vorgegebenen Sollwert eine Fehlfunktion anzeigen und ggf. den Lampenstromkreis öffnen. Eine Parallelschaltung von entsprechenden Lampen des Zugfahrzeuges mit Lampen des Hängers führt wegen des nun doppelt so großen Stromes dazu, daß die Sicherungsschaltung anspricht.

Hiervon ausgehend ist es Aufgabe der vorliegenden Erfindung, eine Schaltungsanordnung der eingangs genannten Art dahingehend weiterzubilden, daß die vorstehend genannten Nachteile vermieden werden. Insbesondere soll es bei einfachem konstruktivem Aufbau der Schaltungsanordnung möglich werden, Fehler in den Blinklichtanlagen von Zugfahrzeug und/oder Hänger zu erkennen, ohne daß ein Nachrüsten des Zugfahrzeuges mit einem neuen Blinkgeber erforderlich ist. Ferner soll es möglich werden, auch moderne Zugfahrzeuge zum Ziehen eines Hängers nachzurüsten, wobei Fehler in der Beleuchtungs- und Signalanlage des Hängers nicht zu einem Ausfall von Lampen des Zugfahrzeuges oder zu Sicherheitsproblemen im Straßenverkehr führen sollen.

Diese Aufgabe wird erfindungsgemäß dadurch gelöst, daß die eingangs erwähnte Schaltungsanordnung eine Umschalteinrichtung aufweist, die wahlweise die Lampen der Blinklichtanlage des Hängers oder die hinteren Lampen der Blinklichtanlage des Zugfahrzeuges mit dem Fahrtrichtungsschalter verbindet.

Die der Erfindung zugrundeliegende Aufgabe wird auf diese Weise vollkommen gelöst. Weil die Schaltungsanordnung den Fehlerzustand einer Lampe der Blinklichtanlage des Hängers erkennt, ist sichergestellt, daß auch ohne Einbau eines neuen Blinkgebers ein Fehlerzustand erkannt wird, der zu einer Verkehrsgefährdung führen könnte. In vielen Fällen ist es nämlich so, daß der nachfolgende Verkehr lediglich die Lampen der Blinklichtanlage des Hängers sehen kann, weil der Hänger die hinteren Lampen der Blinklichtanlage des Zugfahrzeuges vollständig verdeckt.

Ferner ist vorteilhaft, daß der Blinkgeber in bekannter Weise den Ausfall einer Lampe der Blinklichtanlage anzeigt, so daß keine weiteren Änderungen an dem Zugfahrzeug vorgenommen werden müssen. Beispielsweise wird somit über die Änderung der Blinkfrequenz der Ausfall einer Lampe der Blinklichtanlage sowohl des Zugfahrzeuges als auch des Hängers dem Fahrzeugführer signalisiert.

Erfindungswesentlich ist jedoch die Umschalteinrichtung, weil auf diese Weise mit dem Blinkgeber immer nur beispielsweise zwei Lampen je Fahrtrichtung verbunden sind. Bei Zugfahrzeugen, die z.B. drei Blinklampen je Fahrtrichtung aufweisen - eine vordere, eine hintere und ggf. eine auf der Fahrertür oder zusätzlich in der Stoßstange - , ist der Blinkgeber entsprechend ausgelegt und treibt immer drei Lampen, entweder die Lampen des Zugfahrzeuges oder - bei angekoppeltem Hänger - zwei Lampen des Zugfahrzeuges und die Lampe des Hängers. Da - wie bereits erwähnt - der Hänger oft die hinteren Lampen des Zugfahrzeuges verdeckt, ist eine Überwachung der hinteren Lampen des Zugfahrzeuges nicht unbedingt aus Sicherheitsgründen erforderlich.

Hier ist es weiter bevorzugt, wenn die Umschalteinrichtung bei mit der Schaltungsanordnung verbundener Blinklichtanlage des Hängers die Lampen der Blinklichtanlage des Hängers unmittelbar mit dem Fahrtrichtungsschalter verbindet und die beiden hinteren Lampen der Blinklichtanlage des Zugfahrzeuges je über eine zugeordnete Verstärkerschaltung betreibt.

Diese Maßnahme ist insofern von Vorteil, als auch bei angekoppeltem Hänger alle drei Lampen je Fahrtrichtung betrieben werden, wobei jedoch je Fahrtrichtung nur die vordere Lampe des Zugfahrzeuges und die Lampe des Hängers unmittelbar von dem Blinkgeber angesteuert und somit über den Stromfluß überwacht werden. Die Treiberschaltung, die die hinteren Lampen des Zugfahrzeuges betreibt, wird zwar von dem Blinkgeber angesteuert, belastet wegen ihres hochohmigen Eingang den Blinkgeber jedoch nicht.

Auf diese Weise können mit der neuen Schaltungsanordnung hier sämtliche drei Lampen je Fahrtrichtung betrieben werden, während nur die sicherheitsrelevanten Lampen der Blinklichtanlagen von dem Blinkgeber überwacht werden.

Weiterhin ist es bevorzugt, wenn die Schaltungsanordnung eine Hängererkennungsschaltung aufweist, die eine mit der Schaltungsanordnung verbundene Blinklichtanlage eines Hängers solche erkennt und die Lampen der Blinklichtanlage unmittelbar mit dem Fahrtrichtungsschalter verbindet.

Auf diese vorteilhafte Weise wird bereits beim Verbinden der Blinklichtanlage des Hängers mit der Schaltungsanordnung dafür gesorgt, daß die Umschalteinrichtung die oben beschriebenen Verbindungen herstellt, es ist kein externer Schalter erforderlich, den der Fahrzeugführer nach dem Ankoppeln des Hängers betätigen müßte.

Weiterhin ist es bevorzugt, wenn die Schaltungsanordnung eine Fehlererkennungsschaltung aufweist, die bei mit der Schaltungsanordnung verbundener Blinklichtanlage des Hängers einen Fehlerzustand einer angesteuerten hinteren Lampe des Zugfahrzeuges erkennt.

Hierdurch wird in vorteilhafter Weise sichergestellt, daß neben der durch den Blinkgeber bewirkten Überwachung der vorderen Lampe des Zugfahrzeuges und der Lampe des Hängers auch die hintere Lampe der Blinklichtanlage des Zugfahrzeuges überwacht wird. Der Fahrzeugführer ist somit jederzeit über den Zustand der Blinklichtanlagen informiert, was insbesondere aus sicherheitstechnischen Gründen von Vorteil ist.

Hier ist es weiterhin bevorzugt, wenn die Fehlererkennungsschaltung bei einem Fehlerzustand einer angesteuerten hinteren Lampe eine Verstärkerschaltung zwischen den Fahrtrichtungsschalter und die der defekten hinteren Lampe zugeordnete Lampe der Blinklichtanlage des Hängers schaltet.

Hier ist von Vorteil, daß die Fehleranzeige über den Blinkgeber selbst bewirkt wird. Fällt nämlich eine der hinteren Lampen aus und wird deshalb von der Fehlererkennungsschaltung eine Verstärkerschaltung zwischen den Fahrtrichtungsschalter und
somit zwischen den Blinkgeber und die zugeordnete Lampe der Blinklichtanlage des Hängers geschaltet, wird dem Blinkgeber dadurch sozusagen eine noch intakte Lampe genommen und ein Fehlerzustand simuliert. Obwohl die Lampe der Blinklichtanlage des Hängers weiterhin in Betrieb ist, erkennt der Blinkgeber einen Fehlerzustand, da er ja nur noch die vordere Lampe der Blinklichtanlage des Zugfahrzeuges unmittelbar betreibt, während die entsprechende Lampe des Hängers hochohmig über eine Treiberschaltung angesteuert wird. Hier ist somit von Vorteil, daß sämtliche Lampen der Blinklichtanlagen von Zugfahrzeug und Hänger überwacht werden, ohne daß wie bei den bekannten Schaltungsanordnungen ein neuer Blinkgeber in das Zugfahrzeug eingebaut werden müßte. Der Blinkgeber ist immer höchstens mit zwei Lampen je Fahrtrichtung unmittelbar verbunden, während die dritte Lampe bzw. im Fehlerfalle einer hinteren Lampe der Blinklichtanlage des Zugfahrzeuges die zweite Lampe über eine Treiberschaltung betrieben wird, die die Signale des Blinkgebers lediglich hochohmig abgreift und verstärkt.

Weiterhin ist es bevorzugt, wenn die Verstärkerschaltung zum Betreiben der Lampen der Blinklichtanlage des Hängers die Verstärkerschaltung zum Betreiben der hinteren Lampen der Blinklichtanlage des Zugfahrzeuges ist.

Diese Maßnahme ist insbesondere unter konstruktiven Aspekten von Vorteil, weil nämlich nur eine Verstärkerschaltung je Fahrtrichtung in der Schaltungsanordnung vorzusehen ist. Da die Lampe der Blinklichtanlage des Hängers nur in dem Falle über die Verstärkerschaltung betrieben wird, wenn die zugeordnete hintere Lampe der Blinklichtanlage des Zugfahrzeuges defekt ist, kann ein und die selbe Verstärkerschaltung doppelt genutzt werden. Dies spart Bauteile und ist somit auch aus Kostengründen von Vorteil.

Bei diesem Ausführungsbeispiel ist es weiterhin bevorzugt, wenn die Umschalteinrichtung ein Relais mit einem Umschalter aufweist, der in seiner Ruhestellung die hinteren Lampen der Blinklichtanlage des Zugfahrzeuges unmittelbar mit dem Fahrtrichtungsschalter verbindet und der in seiner Arbeitsstellung den Fahrtrichtungsschalter über eine Verstärkerschaltung mit den hinteren Lampen der Blinklichtanlage des Zugfahrzeuges verbindet, wobei das Relais ferner einen Schließkontakt umfaßt, der in seiner Arbeitsstellung die Lampen der Blinklichtanlage des Hängers unmittelbar mit dem Fahrtrichtungsschalter verbindet.

Diese Maßnahme ist ebenfalls konstruktiv von Vorteil, weil mit einem einzigen Relais sowohl die hinteren Lampen des Zugfahrzeuges als auch die Lampen des Hängers in der bereits beschriebenen Weise mit dem Fahrtrichtungsschalter verbunden werden. Hier ist zu bemerken, daß entweder ein gemeinsames Relais für beide Lampensätze (beide Fahrtrichtungen) vorgesehen sein kann, daß es aber auch möglich ist, je Fahrtrichtung ein eigenes Relais vorzusehen.

Weiterhin ist es bevorzugt, wenn das Relais über die Hängererkennungsschaltung angesteuert ist, wobei sich das Relais in seiner den Ruhestellungen von Umschalter und Schließkontakt zugeordneten Ruhestellung befindet, wenn die Blinklichtanlage des Hängers von der Schaltungsanordnung abgeschaltet ist.

Hierdurch wird in vorteilhafter Weise sichergestellt, daß durch das Anschalten bzw. Abkoppeln der Blinklichtanlage des Hängers von der Schaltungsanordnung die Schaltungsanordnung selbst automatisch in den erforderlichen Betriebszustand gebracht wird.

Weiterhin ist es bevorzugt, wenn das Relais mit seiner Spule einerseits mit einer Betriebsspannung des Zugfahrzeuges verbunden ist und andererseits über die Hängererkennungsschaltungs auf Masse gelegt ist, wenn die Blinklichtanlage des Hängers mit der Schaltungsanordnung verbunden ist.

Auf diese konstruktiv einfache Weise wird folglich das Relais aus seiner Ruhestellung in seine Arbeitsstellung gebracht, sobald der Hänger angeschaltet ist.

Ferner ist es bevorzugt, wenn die Hängererkennungsschaltung eine Parallelschaltung von Dioden aufweist, deren Anoden mit dem Relais verbunden sind, und deren Kathoden bei mit der Schaltungsanordnung verbundener Blinklichtanlage des Hängers über die Lampen des Hängers auf Masse gelegt sind.

Hier ist von Vorteil, daß kein weiterer Kontakt erforderlich ist, um die Spule des Relais auf Masse zu legen, vielmehr werden die sowieso mit Masse verbundenen Lampen der Blinklicht-und Beleuchtungsanlage des Hängers zu diesem Zweck verwendet. Über die Parallelschaltung der Dioden teilt sich der Betriebszustrom des Relais auf die entsprechenden Lampen des Hängers gleichmäßig auf, so daß die Belastung der einzelnen Lampen gering ist. Durch die Dioden wird weiterhin dafür gesorgt, daß die einzelnen Lampen des Hängers voneinander entkoppelt
sind, so daß es nicht zu einem "Übersprechen" zwischen verschiedenen Lampen des Hängers kommen kann.

Weiterhin ist es bevorzugt, wenn zwischen der Schaltungsanordnung und der Blinklichtanlage des Hängers eine Übergabeeinrichtung vorgesehen ist, die einen Hängererkennungskontakt aufweist, über den das Relais mit Masse verbindbar ist.

Diese Maßnahme wird vorteilhaft insbesondere dann zu verwenden sein, wenn die Übergabeeinrichtung einen 13-poligen Stecker nach der Vornorm DIN 72570 aufweist, bei dem eine besondere Klemme als Anhängererkennung vorgesehen ist.

Ferner ist es bevorzugt, wenn die Hängererkennungsschaltung eine Treiberschaltung umfaßt, die über eine Parallelschaltung von mit den Lampen des Hängers verbindbaren Dioden angesteuert ist.

Hier ist von Vorteil, daß die Lampen des Hängers nur noch die Steuerspannung für die Treiberschaltung liefern müssen, während der Betriebsstrom des Relais bzw. der Spule über die Treiberschaltung geliefert wird.

In diesem Ausführungsbeispiel ist es ferner bevorzugt, wenn die Fehlererkennungsschaltung die Ströme durch eine hintere Lampe der Blinklichtanlage des Zugfahrzeuges und durch eine Lampe der Blinklichtanlage des Hängers je Fahrtrichtung vergleicht, und aus diesem Vergleich einen Fehlerzustand in einer angesteuerten hinteren Lampe des Zugfahrzeuges erkennt.

Diese Maßnahme ist schaltungstechnisch von Vorteil, weil mit diesem Vergleich alle möglichen Betriebszustände beider Blinklichtanlagen erfaßt werden können. So wird ein Fehler in der hinteren Lampe des Zugfahrzeuges nur dann angezeigt, wenn gleichzeitig kein Strom durch die entsprechende hintere Lampe des Zugfahrzeuges fließt, während ein entsprechender Strom durch die zugeordnete Lampe des Hängers fließt. Sind beide Lampen stromlos oder von Strom durchflossen, wird kein Fehler erkannt. Fließt umgekehrt ein Strom durch die Lampe des Zugfahrzeuges und kein Strom durch die entsprechende Lampe des Hängers, die - wie oben erwähnt - unmittelbar von dem Blinkgeber angesteuert wird, so wird dieser Fehler sowieso durch den Blinkgeber selbst erkannt.

In einem weiteren Ausführungsbeispiel ist bevorzugt, wenn die Umschalteinrichtung bei mit der Schaltungsanordnung verbundener Blinklichtanlage des Hängers die Lampen der Blinklichtanlage je über eine zugeordnete Verstärkerschaltung beschreibt.

Hier ist von Vorteil, daß die Umschalteinrichtung zunächst - im Gegensatz zu dem oben beschriebenen Ausführungsbeispiel - nicht "tätig" werden muß, wenn ein Hänger an das Zugfahrzeug angehängt wird. Die vorderen und hinteren Lampen der Blinklichtanlage des Zugfahrzeuges werden weiterhin von dem Blinkgeber angesteuert, während die Blinklampen des Hängers über Verstärkerschaltungen betrieben werden, die wegen ihres hochohmigen Einganges zu keinem zusätzlichen Stromfluß durch den Blinkgeber führen. Mit anderen Worten, der Blinkgeber "sieht" die zusätzlich von ihm betriebene Blinklampe des Hängers gar nicht. Fällt eine Lampe der Blinklichtanlage des Zugfahrzeuges aus, so wird dies von dem Blinkgeber über die veränderte Stromaufnahme registriert und durch veränderte Blinkfrequenz angezeigt. Fällt dagegen eine Lampe der Blinklichtanlage des Hängers aus, so wird dies, wie bereits oben beschrieben, von der Schaltungsanordnung erkannt und angezeigt.

Weiterhin ist bevorzugt, wenn die Schaltungsanordnung eine Hängererkennungsschaltung aufweist, die eine mit der Schaltungsanordnung verbundene Blinklichtanlage eines Hängers erkennt und an die Umschalteinrichtung meldet.

Diese Maßnahme ist insbesondere konstruktiv von Vorteil, weil jetzt sozusagen automatisch erkannt wird, ob ein Hänger angeschaltet ist oder nicht. Der Fahrzeugführer muß folglich keine Schalter umlegen, um die Schaltungsanordnung in einen entsprechenden Betriebszustand zu bringen.

Hier ist es außerdem bevorzugt, wenn die Umschalteinrichtung eine Fehlererkennungsschaltung aufweist, die bei mit der Schaltungsanordnung verbundener Blinklichtanlage des Hängers einen Fehlerzustand einer angesteuerten Lampe der Blinklichtanlage des Hängers erkennt.

Auch diese Maßnahme ist insbesondere konstruktiv von Vorteil.

Weiterhin ist es bevorzugt, wenn die Fehlererkennungsschaltung bei einem Fehlerzustand einer angesteuerten hinteren Lampe der Blinklichtanlage des Hängers eine Verstärkerschaltung zwischen den Fahrtrichtungsschalter und die der defekten Lampe zugeordnete hintere Lampe der Blinklichtanlage des Zugfahrzeuges schaltet.

Auf diese schaltungstechnisch einfache und vorteilhafte Weise wird, wenn eine Lampe des Hängers ausfällt, dem Blinkgeber zuzusagen eine intakte Lampe "weggenommen", die dann über eine Verstärkerschaltung betrieben wird und somit weiter blinkt. Der Blinkgeber signalisiert jetzt durch veränderter Blinkfrequenz einen Fehlerzustand, während beide Blinklichter des Zugfahrzeuges weiterhin blinken. Es ist somit nicht mehr erforderlich, einen neuen Blinkgeber einzubauen, der statt der üblichen zwei jetzt drei Lampen je Fahrtrichtung überwacht. Bei der Verwendung der neuen Schaltungsanordnung werden weiterhin die Lampen der Blinklichtanlage des Zugfahrzeuges von dem Blinkgeber unmittelbar angesteuert und überwacht, während die Lampen des Hängers über hochohmige Treiberschaltungen betrieben und von der Fehlererkennungsschaltung überwacht werden. Lediglich im Fehlerfalle einer Lampe der Blinklichtanlage des Hängers schaltet die Umschalteinrichtung eine Verstärkerschaltung zwischen den Blinkgeber und eine der hinteren Blinklampen des Zugfahrzeuges, so daß über den Blinkgeber selbst auch der Fehlerzustand einer Blinklampe des Hängers signalisiert wird.

Weiterhin ist es bevorzugt, wenn die Verstärkerschaltung zum Betreiben der Lampen der Blinklichtanlage des Hängers die Verstärkerschaltung zum Betreiben der hinteren Lampen der Blinklichtanlage des Zugfahrzeuges ist.

Diese Maßnahme ist insbesondere schaltungstechnisch von Vorteil, weil nur eine einzige Verstärkerschaltung je Fahrtrichtung verwendet werden muß.

Ferner ist es bevorzugt, wenn die Umschalteinrichtung ein Relais mit einem Umschalter aufweist, der in seiner Ruhestellung die hinteren Lampen unmittelbar mit dem Fahrtrichtungsschalter verbindet, und der in seiner Arbeitsstellung den Fahrtrichtungsschalter über die Verstärkerschaltung mit den hinteren Lampen verbindet, wobei das Relais ferner einen Öffnungskontakt umfaßt, der in seiner geschlossenen Ruhestellung die Lampen der Blinklichtanlage des Hängers über die Verstärkerschaltung mit dem Fahrtrichtungsschalter verbindet.

Diese Maßnahme ist konstruktiv von Vorteil, weil das Relais lediglich dann seine Arbeitsstellung einnehmen muß, wenn eine Blinklampe des Hängers als defekt erkannt wurde. Dies hat den Vorteil, daß im fehlerfreien Betrieb das Relais stromlos ist, so daß insbesondere bei abgestelltem Zugfahrzeug mit Hänger die Batterie des Zugfahrzeuges nicht unnötig belastet wird.

Weiterhin ist es bevorzugt, wenn das Relais über die Hängererkennungsschaltung angesteuert ist, wobei sich das Relais in seiner den Arbeitsstellungen von Umschalter und Schließkontakt zugeordneten Arbeitsstellung befindet, wenn bei mit der Schaltungsanordnung verbundener Blinklichtanlage des Hängers die Fehlererkennungsschaltung einen Leerlaufzustand einer angesteuerten Lampe der Blinklichtanlage des Hängers erkennt.

Auf diese konstruktiv einfache Weise wird durch das Zusammenwirken von Hängererkennungsschaltung und Fehlererkennungsschaltung das Relais lediglich dann in Arbeitsstellung geschaltet, wenn bei einer angesteuerten Lampe der Blinklichtanlage des Hängers ein Leerlaufzustand erkannt wurde. Dies hat den bereits erwähnten Vorteil, daß die Batterie des Zugfahrzeuges geschont wird.

Weiterhin ist es bevorzugt, wenn die Schaltungsanordnung einer Interfaceschaltung zugeordnet ist, die Lampen einer Beleuchtungsanlage des Zugfahrzeuges mit zugeordneten Lampen einer Beleuchtungsanlage des Hängers über Treiberschaltungen verbindet, die von den einzelnen Lampen des Zugfahrzeuges Signalspannungen hochohmig abgreifen.

Diese Maßnahme ist von Vorteil, weil die Signalspannungen der Lampen des Zugfahrzeuges lediglich als Steuersignale für die Treiberschaltungen verwendet werden, wobei es wegen des hochohmigen Abgreifens der Signalspannungen zu keinem erhöhten Stromfluß kommt. Die Sicherungsschaltungen von modernen Zugfahrzeugen werden somit nicht ansprechen, denn trotz eines angeschlossenen Hängers werden sie keine quasi erhöhte Stromaufnahme durch die Lampen des Zugfahrzeuges feststellen. Bei einem Kurzschluß in dem Hänger wird zwar das Bordnetz des Zugfahrzeuges vorübergehend zusammenbrechen können, aber unmittelbar nach dem Abkoppeln des Hängers ist die Beleuchtungs-und Signalanlage des Zugfahrzeuges wieder betriebsbereit. Es muß jetzt lediglich eine Fehlersuche in dem Hänger durchgeführt werden, bei dem Zugfahrzeug ist höchstens die Hauptsicherung auszuwechseln. Es ist ggf. lediglich ein Reset-/Rücksetztaster erforderlich, der die Schaltungsanordnung wieder in einen betriebsfähigen Zustand bringt.

In diesem Ausführungsbeispiel ist es bevorzugt, wenn die Treiberschaltungen an ihrem Ausgang kurzschlußfest sind.

Diese Maßnahme ist besonders vorteilhaft, weil ein Kurzschluß in dem Hänger nicht zu einem Defekt an der in dem Zugfahrzeug angebrachten Schaltungsanordnung führt. Auf diese Weise kann der defekte Hänger abgekoppelt und ein neuer Hänger angekoppelt werden, ohne daß weitere Maßnahmen an dem Zugfahrzeug erforderlich sind. Es ist lediglich der Kurzschluß in dem defekten Hänger zu beseitigen. Zusätzliche Sicherungen in dem Zugfahrzeug müssen nicht vorgesehen werden.

Hier ist es ferner bevorzugt, wenn bei mit der Interfaceschaltung verbundener Beleuchtungsanlage die Hängererkennungsschaltung mit Lampen der Beleuchtungsanlage des Hängers verbunden ist.

Auf diese schaltungstechnisch einfache Weise erkennt die Hängererkennungsschaltung anhand der über die Lampen des Hängers zur Verfügung stehenden Masse, daß ein Hänger angeschaltet wurde.

Ferner ist es bevorzugt, wenn bei mit der Interfaceschaltung verbundener Beleuchtungsanlage die Hängererkennungsschaltung mit einem Hängererkennungskontakt verbunden ist, der auf Masse liegt.

Diese Maßnahme wird vorteilhafterweise insbesondere dann verwendet, wenn die Übergabeeinrichtung einen 13-poligen Stecker nach der Vornorm DIN 72570 aufweist, bei dem eine besondere Klemme als Anhängererkennung vorgesehen ist.

Weiterhin ist es bevorzugt, wenn die Hängererkennungsschaltung mit ausgewählten Treiberschaltungen verbunden ist, derart, daß sie einen Stromfluß durch die entsprechenden Lampen erkennt.

Auf diese schaltungstechnisch einfache Weise wird sichergestellt, daß die Hängererkennungsschaltung auch dann sicher einen angeschalteten Hänger erkennt, wenn kein Hängererkennungskontakt vorhanden ist und wenn andererseits sämtliche Lampen des Hängers eingeschaltet sind. Bei eingeschalteten Lampen des Hängers fällt über den Lampen nämlich eine Spannung ab, die etwa der Betriebsspannung des Zugfahrzeuges entspricht, so daß die Hängererkennungsschaltung, die auf Masse-Erkennung angewiesen ist, keine Masse mehr erkennen könnte. Diese mögliche Fehlerquelle wird dadurch ausgeschaltet, daß die Hängererkennungsschaltung zusätzlich den Stromfluß durch ausgewählte Lampen des Hängers überwacht.

Hier ist es weiter bevorzugt, wenn die Hängererkennungsschaltung den Spannungsabfall über den Treiberschaltungen mißt.

Diese Maßnahme ist konstruktiv von Vorteil, weil lediglich dann, wenn die angesteuerten Lampen des Hängers Strom aufnehmen, über dem Innenwiderstand der Treiberschaltungen Spannung abfällt.

Ferner ist es hier bevorzugt, wenn die Fehlererkennungsschaltung den Spannungsabfall über den Lampen der Blinklichtanlage des Hängers mißt.

Auch diese Maßnahme ist schaltungstechnisch von Vorteil, denn anhand des Spannungsabfalles läßt sich unmittelbar erkennen, ob die entsprechende Lampe im Leerlaufzustand und somit defekt ist.

Weiterhin ist es hier bevorzugt, wenn die Fehlererkennungsschaltung ein Integrierglied aufweist, derart, daß bei blinkender Lampe der Blinklichtanlage des Hängers die Fehlererkennungsschaltung an ihrem Ausgang ein konstantes Signal abgibt.

Durch diese konstruktiv und technisch einfache Maßnahme wird ein konstantes Bewertungssignal zur Verfügung gestellt, obwohl die Spannung über der Blinklampe des Hängers periodisch ein- und ausgeschaltet wird.

In diesem Ausführungsbeispiel ist es ferner bevorzugt, wenn die Fehlererkennungsschaltung und die Hängererkennungsschaltung an ihren Ausgängen über eine Logikschaltung miteinander verknüpft sind, wobei die Logikschaltung in Abhängigkeit von den Signalen der Fehlererkennungsschaltung und der Hängererkennungsschaltung das Relais einschaltet.

Bei dieser Maßnahme ist von Vorteil, daß die Informationen, die die Fehlererkennungsschaltung und die Hängererkennungsschaltung liefern, unmittelbar dazu verwendet werden, das Relais zu schalten. Die Anordnung wird derart sein, daß nur bei einem erkannten Hänger die Fehlererkennungsschaltung überhaupt das Relais schalten kann. Auf diese Weise werden unnötige Schaltvorgänge des Relais verhindert und andererseits wird - wie bereits erwähnt - die Batterie des Zugfahrzeuges entlastet.

Weitere Vorteile ergeben sich aus der Beschreibung und der beigefügten Zeichnung.

Die Erfindung ist in der Zeichnung dargestellt und wird in der nachfolgenden Beschreibung näher erläutert. Es zeigen:
- Fig. 1: in prinzipieller Darstellung die über eine erfindungsgemäße Schaltungsanordnung zusammengeschalteten Blinklichtanlagen eines Zugfahrzeuges und eines Hängers;
- Fig. 2: ein erstes Ausführungsbeispiel der Schaltungsanordnung aus Fig. 1;
- Fig. 3: ein zweites Ausführungsbeispiel der Schaltungsanordnung aus Fig. 1, mit einer Fehlererkennungsschaltung;
- Fig. 4: ein schaltungstechnisch ausgeführtes Beispiel für die Fehlererkennungsschaltung aus Fig. 3;
- Fig. 5: in prinzipieller Darstellung die über eine Interface-Schaltung und eine Schaltungsanordnung aus Fig. 1 zusammengeschalteten Beleuchtungs- und Signalanlagen eines Zugfahrzeuges und eines Hängers;
- Fig. 6: in einer Darstellung wie Fig. 1 eine erfindungsgemäße Schaltungsanordnung mit einem weiteren Ausführungsbeispiel für eine Hängererkennungsschaltung;
- Fig. 7: in einer Darstellung wie Fig. 1 ein drittes Ausführungsbeispiel für eine Hängererkennungsschaltung;
- Fig. 8: eine Darstellung wie Fig. 5, jedoch mit einem weiteren Ausführungsbeispiel der erfindungsgemäßen Schaltungsanordnung;
- Fig. 9: die Schaltungsanordnung nach Fig. 8, in einer schematischen Darstellung mit angedeuteter Umschalteinrichtung und Hängererkennungsschaltung;
- Fig. 10: die Umschalteinrichtung nach Fig. 9, in einer detaillierteren Darstellung mit angedeuteter Fehlererkennungseinrichtung;
- Fig. 11: die Fehlererkennungseinrichtung nach Fig. 10, in einer detaillierteren Darstellung; und
- Fig. 12: die Hängererkennungsschaltung nach Fig. 9, in einer detaillierteren Darstellung.

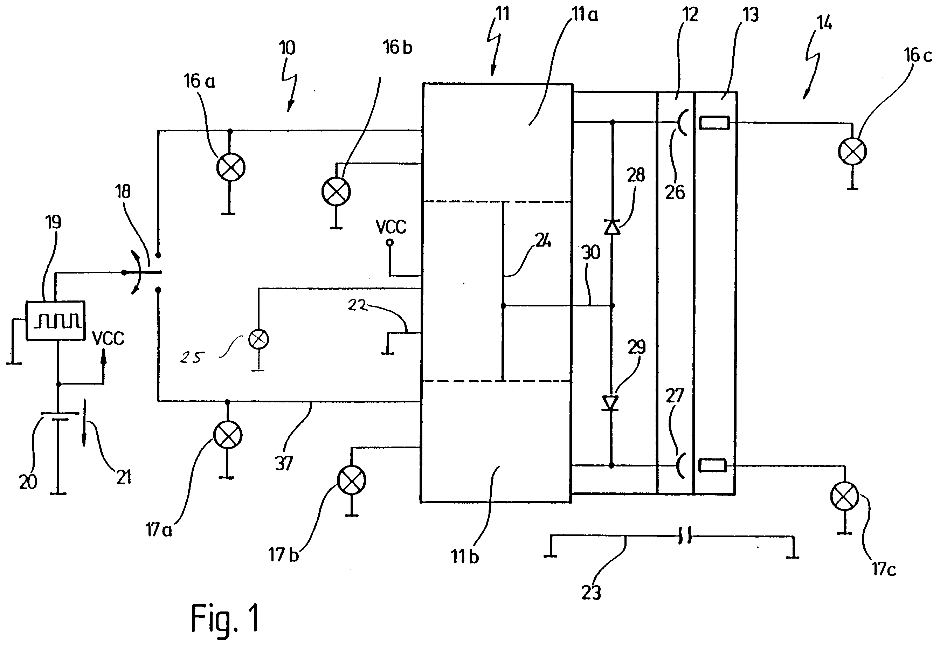

In Fig. 1 ist mit 10 eine elektrische Blinklichtanlage eines nicht näher dargestellten Zugfahrzeuges bezeichnet, die mit einer in das Zugfahrzeug eingebauten Schaltungsanordnung 11 verbunden ist. Die Schaltungsanordnung 11 weist eine Steckdose 12 auf, die einem Stecker 13 zugeordnet ist, über den eine elektrische Blinklichtanlage 14 eines ebenfalls nicht dargestellten Hängers mit der elektrischen Anlage des Zugfahrzeuges verbunden werden kann.

In Fig. 1 sind mit 16 und 17 einzelne Lampen der Blinklichtanlagen 10 bzw. 14 bezeichnet. Die Lampen 16 sind die linken und die Lampen 17 die rechten Lampen der Blinklichtanlage 10 bzw. 14. In dem gezeigten Ausführungsbeispiel bezeichnen 16a, 17a die vorderen Blinklichter des Zugfahrzeuges und 16b, 17b die hinteren Blinklichter des Zugfahrzeuges, während mit 16c, 17c die Blinklichter des Hängers bezeichnet sind.

Wie üblich, weist das Zugfahrzeug einen Fahrtrichtungsschalter 18 auf, der drei Stellungen einnehmen kann. Während er in der gezeigten Mittenstellung unwirksam ist, verbindet er in seinen anderen Stellungen einen Blinkgeber 19 mit den linken oder rechten Blinklichtern 16 bzw. 17.

Der Blinkgeber 19 ist mit einer Batterie 20 verbunden, die das Zugfahrzeug mit seiner Betriebsspannung 21 versorgt, die im weiteren auch mit VCC bezeichnet wird. Es ist zu erkennen, daß die Schaltungsanordnung 11 mit der Betriebsspannung 21 verbunden ist und ebenfalls einen Masseanschluß 22 aufweist. Weiterhin ist zu erkennen, daß der Hänger über eine Masseleitung 23 mit der Masse des Zugfahrzeuges verbunden ist. In dem gezeigten Ausführungsbeispiel ist die Masseleitung 23 nicht über Steckdose 12 und Stecker 13 geführt. Weiterhin ist eine Statusanzeige 25 zu erkennen, die dem Fahrer Informationen über den Zustand sowohl der Schaltungsanordnung 11 als auch der Blinklichter 16b, 17b, 16c, 17c liefert. Die Statusanzeige kann auch als Störungsanzeige verwendet und beispielsweise in einem Störungsfall mit veränderter Blinkfrequenz betrieben werden.

Weiterhin ist in Fig. 1 gezeigt, daß die linken Lampen 16 der Blinklichtanlagen 10 und 14 mit einer Baugruppe 11a der Schaltungsanordnung 11 verbunden sind, während für die rechten Lampen 17 eine Baugruppe 11b vorgesehen ist. Die beiden Baugruppen 11a und 11b sind mit einander über eine Leitung 24 und mit Kontakten 26, 27 der Steckdose 12 über Dioden 28, 29 verbunden. Die Dioden 28 und 29 sind mit ihren Anoden zusammengeschaltet und hängen mit ihren Kathoden an den Kontakten 26 bzw. 27. Die Anoden der Dioden 28, 29 sind über eine Hängererkennungsleitung 30 mit der Leitung 24 verbunden, so daß sie in noch zu beschreibender Weise eine Hängerkennungsschaltung darstellen.

Bei gestecktem Hänger, d.h., wenn der Stecker 13 in die Steckdose 12 gesteckt wurde, wie es in Fig. 1 dargestellt ist, erkennt die Schaltungsanordnung 11 dies über die Hängererkennungsleitung 30. Bei gestecktem Hänger sind nämlich die Kathoden der Dioden 28 und 29 über die Lampen 16c bzw. 17c mit Masse verbunden, so daß durch die Dioden 28, 29 ein Strom fließen kann. Wegen der Parallelschaltung der Dioden 28 und 29 halbiert sich der auf der Hängererkennungsleitung 30 fließende Strom, so daß jede der Lampen 16c, 17c nur die Hälfte des in der Hängererkennungsleitung 30 fließenden Stromes führen muß.

Wenn eine der Lampen 16, 17 der Blinklichtanlage 10 des Zugfahrzeuges ausfällt, so erkennt der Blinkgeber 19 bei entsprechend betätigtem Fahrtrichtungsschalter 18 diesen Ausfall an der veränderten Stärke des fließenden Stromes. In diesem Falle erhöht sich in bekannter Weise die Blinkfrequenz, so daß der Fahrer des Zugfahrzeuges auf einer Kontrolleuchte im Wageninneren den Ausfall einer Lampe 16, 17 seiner Blinklichtanlage 10 erkennt. Dies gilt, wenn der Stecker 13 nicht in die Steckdose 12 gesteckt ist.

Bei gestecktem Stecker 13 fließt auf der Hängererkennungsleitung 30 - wie oben beschrieben - ein Strom, der in noch näher zu beschreibender Weise bewirkt, daß die Schaltungsanordnung 11 für einen veränderten Stromfluß in dem Blinkgeber 19 sorgt, wenn der Fahrtrichtungsschalter 18 betätigt wurde und die zugeordnete Lampe 16c bzw. 17c der Blinklichtanlage 14 des Hängers defekt ist, d.h. wenn ihr Glühfaden gebrochen ist.

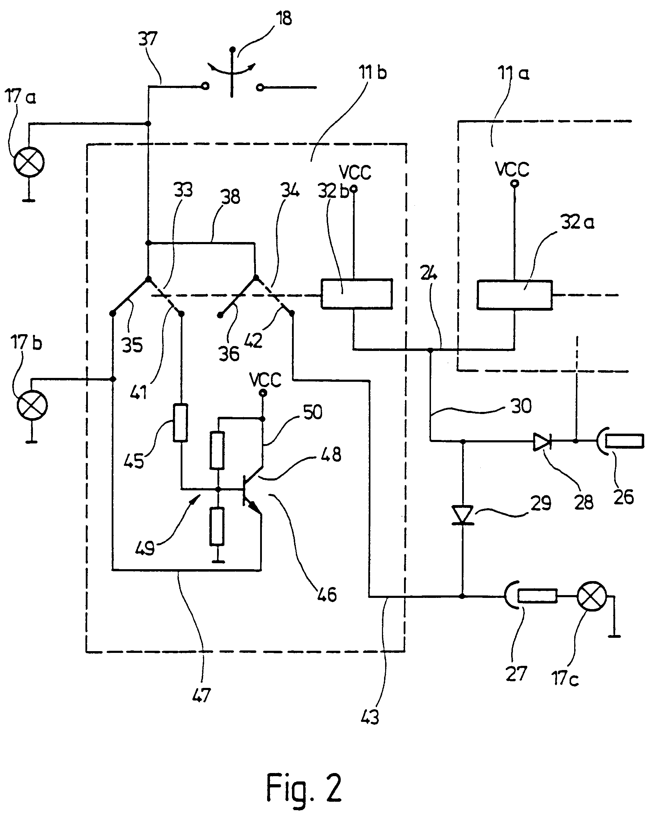

Wie dies geschieht, wird jetzt anhand von Fig. 2 erläutert, in der die den rechten Lampen 17 zugeordnete Baugruppe 11b detaillierter dargestellt ist. Die in gleicher Weise wie die Baugruppe 11b aufgebaute Baugruppe 11a ist in Fig. 2 lediglich schematisch angedeutet.

Die Anhängererkennungsleitung 30 ist über die Leitung 24 mit zwei Relais 32a und 32b verbunden, die in den Baugruppen 11a bzw. 11b angeordnet sind. Das Relais 32b weist einen 2-poligen Umschalter 33 sowie einen Schließkontakt 34 auf. Umschalter und Schließkontakt des in gleicher Weise aufgebauten Relais 32a sind in Fig. 2 nicht dargestellt. Statt zweier Relais 32a, 32b kann auch ein Relais 32 mit zwei Umschaltern und zwei Schließkontakten vorgesehen sein.

Das Relais 32b ist mit seiner Spule mit der Betriebsspannung VCC verbunden und über die Leitung 24 und die Anhängererkennungsleitung 30 über die Parallelschaltung der Dioden 28, 29 auf Masse gelegt, wenn der Stecker 13 in die Steckdose 12 gesteckt ist. In diesem Falle zieht das Relais 32b an und schaltet den Umschalter 33 und den Schließkontakt 34 um. Die Stromaufnahme der Relais 32a, 32b ist so gering, daß die Funktion der Lampen 16c und 17c durch den fließenden Strom nicht beeinträchtigt wird. Selbst bei Ausfall einer der beiden Lampen 16c, 17c bleiben die Relais 32a, 32b wegen der Parallelschaltung über die Dioden 28, 29 noch im angezogenen Zustand.

Im Ruhezustand des Relais 32b, wenn also der Stecker 13 nicht gesteckt ist, nehmen der Umschalter 33 und der Schließkontakt 34 eine Ruhestellung an, die in Fig. 2 mittels durchgezogener Striche bei 35 und 36 angedeutet ist. In seiner Ruhestellung 35 verbindet der Umschalter 33 die hintere Lampe 17b des Zugfahrzeuges über eine Versorgungsleitung 37 mit dem Fahrtrichtungsschalter 18. Der Schließkontakt 34 ist über eine Leitung 38 ebenfalls mit der Versorgungsleitung 37 verbunden, schleift diese in seiner Ruhestellung 36 jedoch nicht durch.

Wenn das Relais 32b infolge Stromflusses auf der Anhängererkennungsleitung 30 umschaltet, befinden sich Umschalter 33 und Schließkontakt 34 in ihren bei 41 bzw. 42 gestrichelt angedeuteten Arbeitsstellungen. In der Arbeitsstellung 42 verbindet der Schließkontakt 34 nun die Versorgungsleitung 37 über seine Ausgangsleitung 43 mit dem für die rechte Lampe 17c der Blinklichtanlage 14 des Hängers vorgesehenen Kontakt 27. Der Umschalter 33 leitet die auf der Versorgungsleitung 37 bei betätigtem Fahrtrichtungsschalter 18 anstehenden Blinkimpulse in seiner nun eingenommenen Arbeitsstellung 41 über einen Widerstand 45 an eine Verstärkerschaltung 46 weiter, deren Ausgangsleitung 47 mit der Lampe 17b verbunden ist.

Die Verstärkerschaltung 46 hat einen hochohmigen Eingangswiderstand und belastet die Versorgungsleitung 37 nur sehr gering.

Auf diese Weise wird sichergestellt, daß bei in Fig. 2 nach links geschwenktem Fahrtrichtungsschalter 18 der Blinkgeber 19 nur den Versorgungsstrom für die Lampen 17a und 17c liefern muß, während die Lampe 17b über die Verstärkerschaltung 46 betrieben wird. Das Relais 32, der Umschalter 33, der Schließkontakt 34 und die Verstärkerschaltung 46 wirken folglich als Umschalteinrichtung, die wahlweise die Lampen 16b, 17b oder 16c, 17c unmittelbar mit dem Fahrtrichtungsschalter 18 verbindet. Obwohl der Blinkgeber 19 also nur für den Betrieb und damit für die Fehlererkennung von zwei Blinklichtern ausgelegt ist, sorgt die Baugruppe 11b dafür, daß drei Blinklichter 17a, 17b und 17c angesteuert werden können. Bei nicht gestecktem Stecker 13 werden - wie bisher - die Lampen 17a und 17b unmittelbar von dem Blinkgeber 19 betrieben, so daß ein Ausfall einer dieser beiden Lampen bei entsprechend betätigtem Fahrtrichtungsschalter 18 von dem Blinkgeber 19 erkannt wird. Bei gestecktem Stecker 13 dagegen überwacht der Blinkgeber 19 nunmehr die vordere Lampe 17a des Zugfahrzeuges sowie die Lampe 17c des Hängers. Dies ist aus Sicherheitsgründen erforderlich, denn in vielen Fällen sind die hinteren Blinklichter 16b und 17b des Zugfahrzeuges bei angehängtem Hänger von dem nachfolgenden Verkehr nicht zu erkennen. Der Fahrer eines solchen Wagenzuges muß also darüber informiert werden, wenn Blinklichter 16c, 17c des Hängers ausfallen.

Mit der neuen Schaltungsanordnung 11 ist es nicht mehr erforderlich, den ursprünglichen Blinkgeber 19 eines Zugfahrzeuges auszuwechseln, wenn dieses auf Hängerbetrieb umgerüstet werden soll. Bei dem sowieso erforderlichen Nachrüsten des Zugfahrzeuges mit einer Steckdose 12 zum Verbinden des Hängers mit der elektrischen Anlage des Zugfahrzeuges wird die neue Schaltungsanordnung 11 mit in das Zugfahrzeug eingebaut, so daß automatisch beim Ankoppeln des Hängers - beim Stecken des Steckers 13 in die Steckdose 12 - sichergestellt ist, daß der Blinkgeber 19 nunmehr neben der vorderen Lampe 16a, 17a die Lampe 16c, 17c des Hängers überwacht.

Es sei noch erwähnt, daß die Verstärkerschaltung 46 in dem in Fig. 2 gezeigten Ausführungsbeispiel einen Transistor 48 aufweist, an dessen Basis ein Spannungsteiler 49 zur Arbeitspunkteinstellung angeschaltet ist. Der Spannungsteiler 49 ist wie der Transistor 48 mit seinem Kollektoranschluß 50 mit Betriebsspannung VCC verbunden. Der Transistor 48 ist über seinen Emitter 51 mit der Ausgangsleitung 57 zusammengeschaltet, so daß bei in Arbeitsstellung 41 befindlichem Umschalter 33 die Lampe 17b ihren Betriebsstrom über den Kollektoranschluß 50, den Emitter 51 und die Ausgangsleitung 47 unmittelbar von der Betriebsspannung VCC bezieht. Der Transistor 48 ist ausgangsseitig kurzschlußfest, so daß im Falle eines Kurzschlusses bei der Lampe 17b die Betriebsspannung VCC nicht zusammenbricht. Als Verstärkerschaltung 46 kann beispielsweise ein unter der Bezeichnung BTS 432E im Handel erhältliches Bauteil verwendet werden.

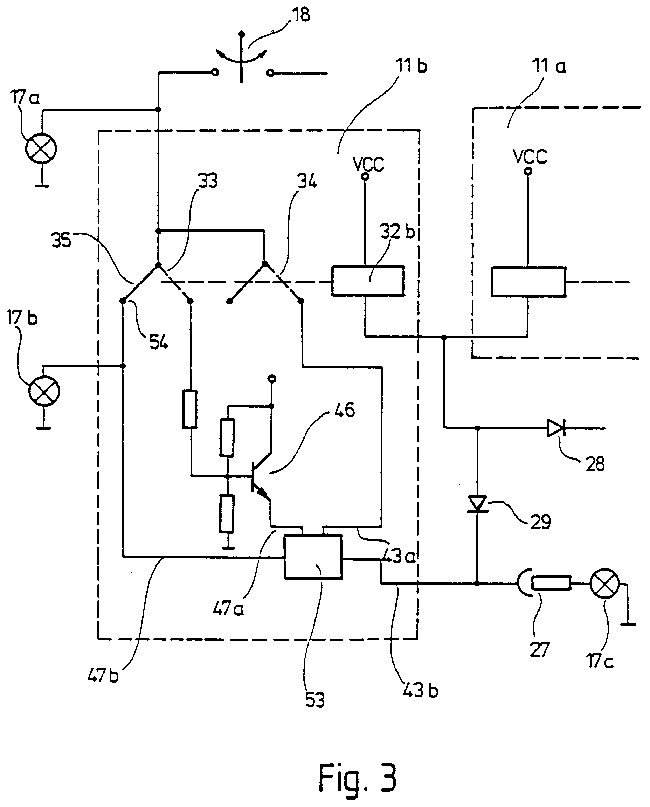

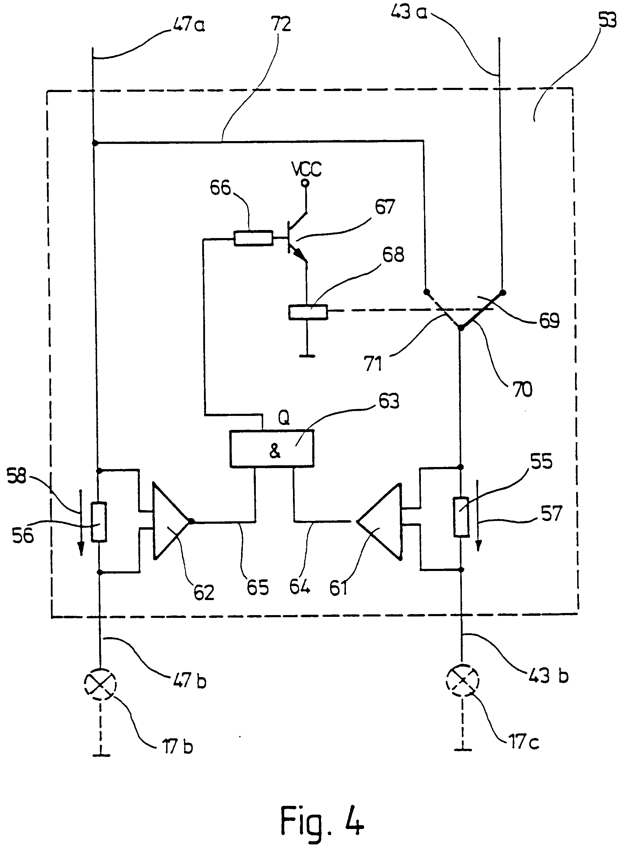

Während bei der Baugruppe 11b aus Fig. 2 die hintere Lampe 17b der Blinklichtanlage 10 des Zugfahrzeuges bei gestecktem Hänger nicht überwacht wird, ist in Fig. 3 ein Ausführungsbeispiel gezeigt, in dem die Baugruppe 11b zusätzlich zu den anhand von Fig. 2 erläuterten Bauteilen eine Fehlererkennungsschaltung 53 aufweist, die dem Blinkgeber 19 in anhand von Fig. 4 zu beschreibender Weise zusätzlich den Ausfall der Lampe 17b meldet. In Fig. 3 ist gezeigt, daß die Fehlererkennungsschaltung 53 in die Ausgangsleitungen 43 und 47 des Schließkontaktes 34 bzw. der Verstärkerschaltung 46 zwischengeschaltet ist. Die Ausgangsleitungen 43 und 47 sind sozusagen aufgetrennt worden und führen mit ihren Abschnitten 43a bzw. 47a in die Fehlererkennungsschaltung 53 hinein, während ihre Abschnitte 43b bzw. 47b aus der Fehlererkennungsschaltung 53 herausführen und wie bereits anhand von Fig. 2 erklärt, mit dem Kontakt 27 bzw. mit der Lampe 17b und damit mit dem der Ruhestellung 35 zugeordneten Kontakt 54 des Umschalters 33 verbunden sind.

In Fig. 4 ist die Fehlererkennungsschaltung der Baugruppe 11b detaillierter dargestellt, wobei aus Gründen der Übersichtlichkeit zusätzlich lediglich die Lampen 17b und 17c gestrichelt angedeutet sind. Über die Ausgangsleitungen 43a und 47a ist die Fehlererkennungsschaltung 53 - wie in Fig. 3 gezeigt - mit der Baugruppe 11b verbunden. Eine entsprechende Fehlererkennungsschaltung ist auch in Baugruppe 11a vorgesehen.

Fig. 4 zeigt, daß in die Ausgangsleitungen 43b und 47b je ein niederohmiger Meßwiderstand 55 bzw. 56 geschaltet ist, über den eine Spannung 57 bzw. 58 abfällt. Der Widerstandswert der Meßwiderstände 56, 55 beträgt ca. 30 m Ω , so daß der Stromfluß durch die Lampen 17c und 17b durch die Meßwiderstände 55, 56 nicht beeinträchtigt wird.

Die Spannungen 57, 58 werden über Differenzverstärker 61 und 62 von den Meßwiderständen 55 und 56 abgegriffen und zu einer UND-Schaltung 63 geleitet. Während der Differenzverstärker 61 einen nicht-invertierenden Ausgang 64 aufweist, besitzt der Differenzverstärker 62 einen invertierenden Ausgang 65, was durch den Punkt am Ausgang des den Differenzverstärker 62 symbolisierenden Dreieckes angedeutet ist.

Die UND-Schaltung 63 ist an ihrem Ausgang Q über einen Längswiderstand 66 mit einem Schalttransistor 67 verbunden, der ein Umschaltrelais 68 ansteuert. Das Umschaltrelais 68 weist einen Umschalter 69 auf, der in seiner durchgezogen angedeuteten Ruhestellung 70 den Abschnitt 43a der Ausgangsleitung 43 mit dem Abschnitt 43b verbindet. In seiner in Fig. 4 gestrichelt dargestellten Arbeitsstellung 71 verbindet der Umschalter 69 dagegen den Abschnitt 47a der Ausgangsleitung 47 über eine Verbindungsleitung 72 mit dem Abschnitt 43b.

Für die weitere Funktionsbeschreibung der Fehlererkennungsschaltung 53 sei angenommen, daß der Stecker 13 gesteckt ist, so daß der Blinkgeber 19 über die Ausgangsleitung 43 die Lampe 17c der Blinklichtanlage 14 des Hängers ansteuert und auf Ausfall überwacht. In diesem Falle befindet sich der Umschalter 69 des Umschaltrelais 68 in Ruhestellung 70. Wenn jetzt beide Lampen 17b und 17c funktionsbereit sind, fallen über beiden Meßwiderständen 55, 56 Spannungen 57, 58 ab, so daß die Signale der Ausgänge 64, 65 unterschiedlich sind. Der Ausgang Q der UND-Schaltung 63 ist daher auf logisch L, so daß der Schalttransistor 67 nicht durchschaltet, das Relais 68 bleibt in Ruhe.

Fällt jetzt die Lampe 17c durch Fadenbruch aus, so geht der Spannungsabfall 57 auf 0 V zurück, so daß der Ausgang 64 auf logisch L geht und der Ausgang Q der UND-Schaltung 63 ebenfalls auf logisch L bleibt, so daß das Umschaltrelais 68 nicht anzieht. Wegen der verringerten Stromaufnahme - nur noch die Lampe 17a wird direkt von dem Blinkgeber 19 getrieben - erkennt der Blinkgeber 19 den Ausfall einer der Lampen 17a bzw. 17c.

Sollte jetzt statt der Lampe 17c die Lampe 17b durch Fadenbruch ausfallen, geht die Spannung 58 auf O V zurück, so daß der Ausgang 65 auf logisch H umspringt. Da wegen der in Betrieb befindlichen Lampe 17c der Ausgang 64 ebenfalls auf logisch H ist, nimmt auch der Ausgang Q diesen Wert an, wodurch das Umschaltrelais 68 den Umschalter 69 in seine Arbeitsstellung 71 schaltet. Auf diese Weise wird dem Blinkgeber 19 sozusagen die Lampe 17c weggenommen und ein Fadenbruch simuliert. Der Blinkgeber 19 arbeitet jetzt mit doppelter Frequenz und deutet dem Fahrer den Ausfall einer seiner Blinklichter an.

Über die Verbindungsleitung 72 wird die Lampe 17c jetzt durch die Verstärkerschaltung 46 angesteuert, so daß weiterhin die Lampen 17a und 17c blinken - was aus Sicherheitsgründen von Vorteil ist - , während dem Fahrer der Ausfall einer Lampe - in diesem Falle 17b - angezeigt wird.

Abschließend sei erwähnt, daß auch bei nicht betätigtem Fahrtrichtungsschalter 18 das Umschaltrelais 68 nicht anzieht, da in diesem Falle zwar beide Spannungen 57, 58 null Volt betragen, da aber in diesem Falle der Ausgang 64 auf logisch L ist, ist ebenfalls der Ausgang Q auf logisch L.

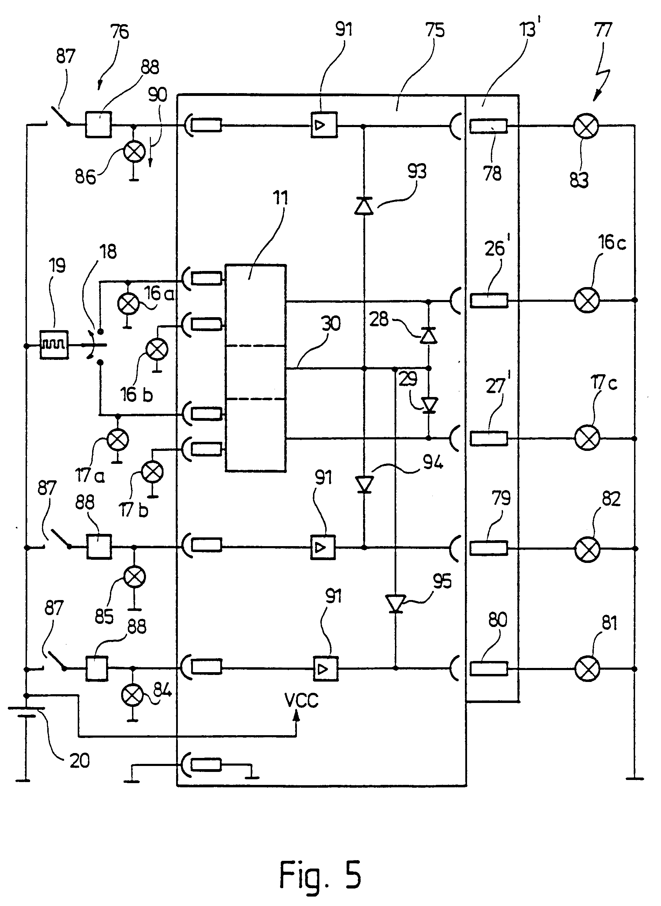

In Fig. 5 ist die Zusammenschaltung der in so weit beschriebenen Schaltungsanordnung mit einer Interface-Schaltung 75 beschrieben, über die eine Beleuchtungs- und Signalanlage 76 des Zugfahrzeuges mit einer Beleuchtungs- und Signalanlage 77 des Hängers verbunden werden kann. Zu diesem Zweck ist ein Stecker 13' vorgesehen, der über die Kontakte 26' und 27' die Blinklichter 16c und 17c des Hängers mit der Schaltungsanordnung 11 verbindet. Der Stecker 13' weist weitere Kontakte 78, 79 und 80 auf, über die Lampen 81, 82 und 83 des Hängers mit dem Interface 75 verbunden werden, wenn der Stecker 13' in die zugeordnete Steckdose 12' gesteckt ist.

In Fig. 5 sind mit 84, 85 und 86 einzelne Lampen der elektrischen Beleuchtungs- und Signalanlage 76 bezeichnet. Die Lampen 84, 85 und 86 sind wahlweise über Schalter 87 und Sicherungseinrichtungen 88 mit der Batterie 20 verbindbar. Die Schalter 87 werden wahlweise von dem Fahrer des Zugfahrzeuges geschlossen, um einzelne Lampen 84 - 86 mit Strom zu versorgen. Aufgabe der Sicherungseinrichtungen 88 ist es dabei, bei einem zu hohen Stromfluß durch die Lampen, wie es beispielsweise durch einen Kurzschluß geschehen kann, die Lampen 84 - 86 trotz geschlossener Schalter 87 von der Batterie 20 abzukoppeln und somit zu verhindern, daß das übrige elektrische System des Zugfahrzeuges wegen überlasteter Batterie 20 zusammenbricht.

Im Betriebsfalle der Lampen 84 - 86 fallen über den Lampen 84 - 86 Signalspannungen 90 ab, wie dies anhand der Lampe 86 dargestellt ist. Die Signalspannungen 90 werden über Treiberschaltungen 91 hochohmig abgegriffen, und zu den Kontakten 78 - 80 und damit zu den Lampen 81 - 83 des Hängers geleitet.

Die Treiberschaltungen 91 weisen - wie gesagt - je einen hochohmigen Eingang auf, der die entsprechenden Signalspannungen 90 der zugeordneten Lampen 84 - 86 nicht belastet. An ihren Ausgängen sind die Treiberschaltungen 91 kurzschlußfest, so daß auch bei einem Kurzschluß der Lampen 81 - 83 die Treiberschaltungen 91 nicht zerstört werden.

Aufgabe der Treiberschaltungen 91 ist es, zu verhindern, daß die Sicherungseinrichtungen 88 anspringen, wenn zu den entsprechenden Lampen 84 - 86 des Zugfahrzeuges die Lampen 81 - 83 des Hängers parallel geschaltet werden. Die Interface-Schaltung 75 sorgt folglich allgemein gesprochen dafür, daß trotz der bestehenden Sicherungseinrichtungen 88 ein Zugfahrzeug auf Hängerbetrieb umgerüstet werden kann, ohne daß Modifikationen an den Sicherungseinrichtungen 88 vorgenommen werden müssen. Würden die Lampen 81 -83 unmittelbar parallel zu den Lampen 84 - 86 geschaltet, würde der dann im Betriebsfall erhöhte Stromfluß dazu führen, daß die Sicherungsschaltungen 88 einen Fehler erkennen würden.

Die in die Interface-Schaltung 75 integrierte bereits anhand der Fig. 1 - 4 beschriebene Schaltungsanordnung 11 sorgt in der oben beschriebenen Weise für den Betrieb der Blinklichter 16c und 17c des Hängers. Die Lampen 81, 82 und 83 entsprechen beispielsweise einem Bremslicht 81 sowie linkem und rechtem Standlicht 82 und 83. Entsprechend bezeichnet 84 das Bremslicht des Zugfahrzeuges während 85 und 86 dessen linkes und rechtes Standlicht andeuten.

Weiterhin ist in Fig. 5 zu erkennen, daß zusätzlich zu den Dioden 28 und 29 weitere Dioden 93, 94 und 95 vorgesehen sind, welche die Hängererkennungsleitung 30 ebenfalls mit den Kontakten 78, 79 und 80 verbinden. Durch diese Parallelschaltung von insgesamt fünf Dioden 28, 29, 93, 94 und 95 wird der Betriebsstrom der in Fig. 2 zu erkennenden Relais 32a, 32b auf insgesamt fünf Lampen 16c, 17c, 81, 82 und 83 aufgeteilt. Selbst beim Ausfall mehrerer der Lampen 17c, 16c, 81, 82 und 83 ist noch für einen sicheren Betrieb der Schaltungsanordnung 11 gesorgt. Außerdem ist die Belastung der einzelnen Lampen 16c, 17c, 81, 82 und 83 geringer als nach der Schaltung aus Fig. 1.

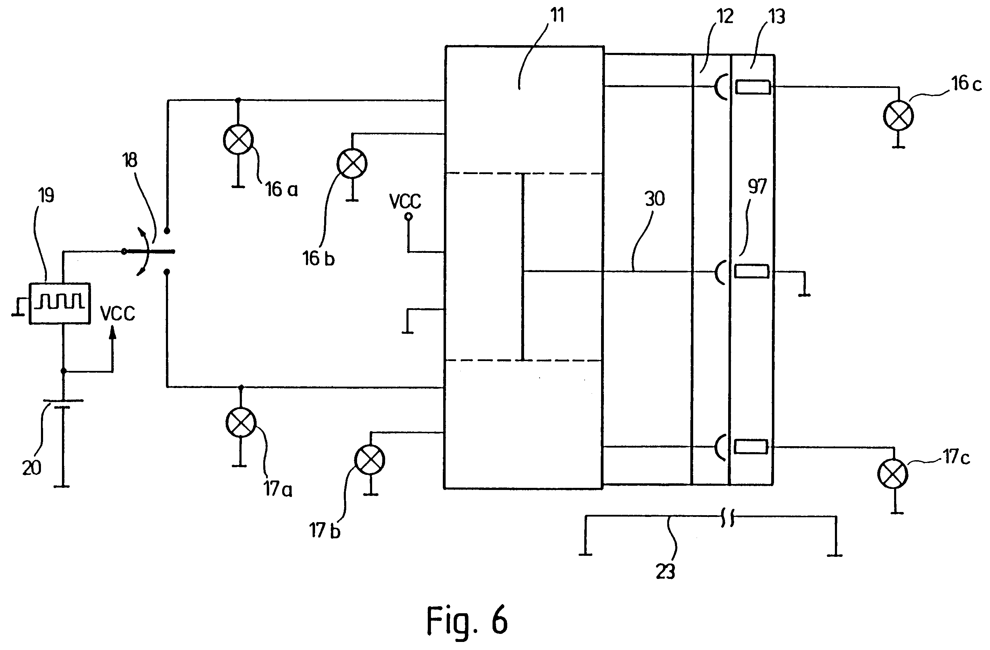

In Fig. 6 schließlich ist in einer Darstellung wie Fig. 1 gezeigt, daß die Anhängererkennungsleitung 30 auch über einen eigenen Kontakt 97 unmittelbar mit der Masse des Hängers verbunden werden kann. Dies ist beispielsweise bei 13-poligen Steckern nach der Vornorm DIN 72570 möglich, bei denen eine Klemme als Anhängererkennung vorgesehen ist. In dem in Fig. 6 gezeigten Ausführungsbeispiel fließt daher der Betriebsstrom der Relais 32a, 32b nicht mehr über die Lampen 16c, 17c, 81, 82 und 83 des Hängers, sondern ausschließlich über den Kontakt 97.

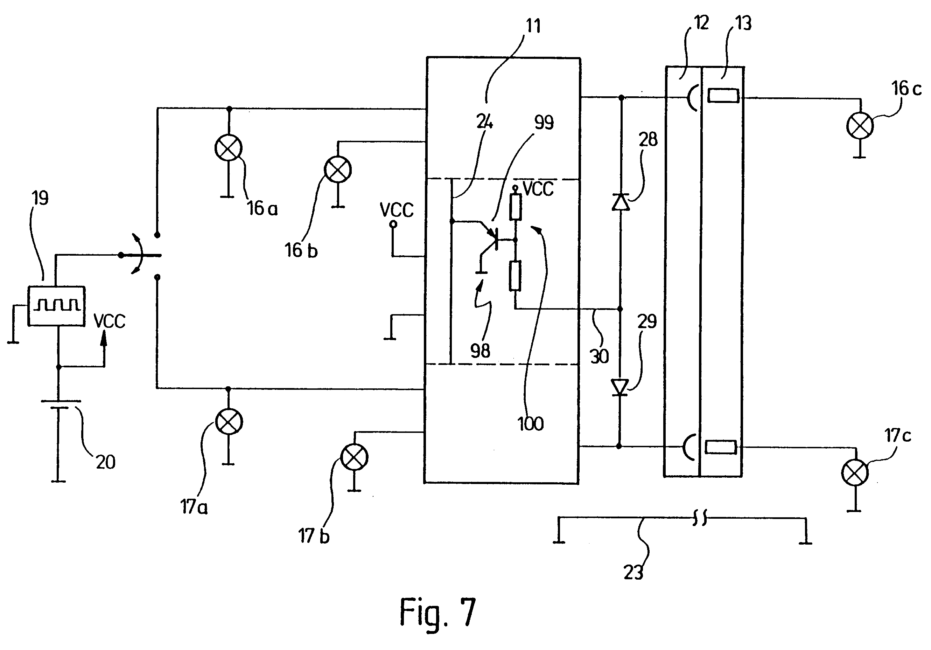

In einem weiteren Ausführungsbeispiel der Schaltungsanordnung 11 ist in Fig. 7 in einer Darstellung ähnlich wie Fig. 1 und 6 gezeigt, das zwischen der Leitung 24, die die beiden Relais 32a und 32b miteinander verbindet, sowie der Anhängererkennungsleitung 30 eine Treiberschaltung 98 vorgesehen ist. Die Treiberschaltung 98 weist einen Transistor 99 auf, dessen einer Kontakt mit der Leitung 24 und dessen anderer Kontakt mit Masse verbunden ist. An seiner Basis wird der Transistor 99 über einen Spannungsteiler 100 angesteuert, dessen einer Widerstand mit der Betriebsspannung VCC und dessen anderer Widerstand mit der Anhängererkennungsleitung 30 verbunden ist. Auf diese Weise ist der Transistor 99 gesperrt, solange kein Stecker 13 in die Steckdose 12 gesteckt wurde, und die Relais 32a und 32b sind in Ruhestellung.

Wird dagegen ein Stecker 13 in die Steckdose 12 gesteckt, so wird der Spannungsteiler 100 über die Dioden 28 und 29 sowie die Lampen 16c und 17c mit Masse verbunden, so daß der Transistor 99 durchgesteuert wird. Jetzt fließt ein Strom über die Leitung 24 und die Emitterkollektorstrecke des Transistors 99 auf Masse, so daß die Relais 32a und 32b schalten.

In diesem Ausführungsbeispiel müssen die Lampen 16c und 17c lediglich den Ansteuerstrom für den Transistor 99, d.h. den durch den Spannungsteiler 100 fließenden Strom aufnehmen, der wesentlich geringer ist als der Betriebsstrom der Relais 32a und 32b.

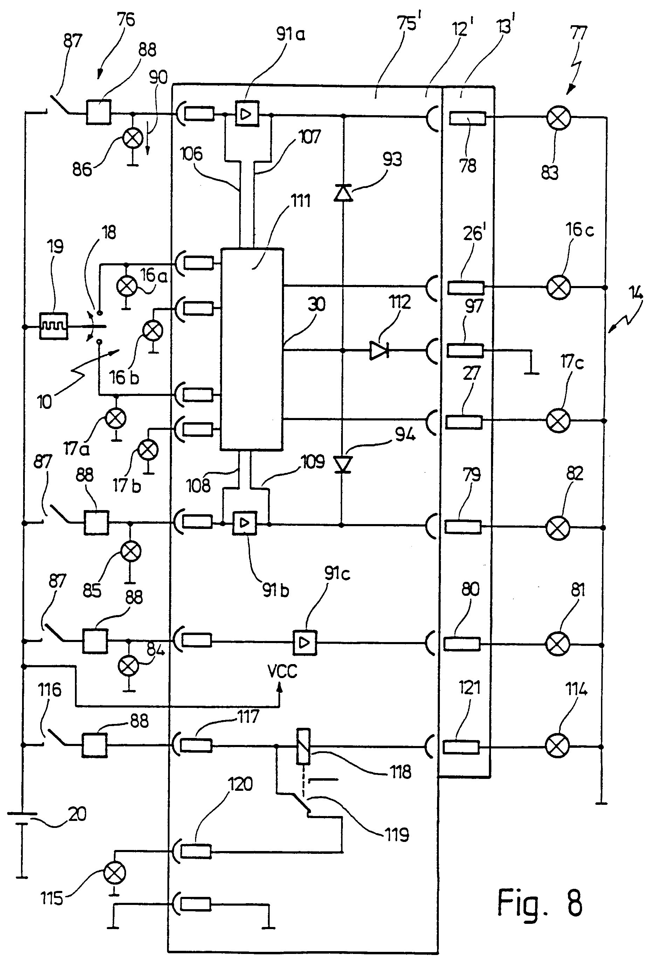

In Fig. 8 ist wie in Fig. 5 eine Interface-Schaltung 75' gezeigt, in der über Meßleitungen 106, 107, 108 und 109 eine Schaltungsanordnung 111 in einem weiteren Ausführungsbeispiel mit den Treiberschaltungen 91a, 91b verbunden ist. Die Hängererkennungsschaltung 30 ist in dem gezeigten Beispiel zusätzlich zu den Dioden 93 und 94 noch über eine Diode 112 und den Kontakt 97 mit Masse verbunden.

Über die Meßleitungen 106 und 107 bzw. 108 und 109 erkennt die Schaltungsanordnung 111, ob durch die Lampen 83 und 82 der Beleuchtungsanlage 77 des Hängers ein Strom fließt. Dies wird in noch näher zu beschreibender Weise anhand des Spannungsabfalls über den zugeordneten Treiberschaltungen 91b, 91a ermittelt.

Die Maßnahme der Spannungsmessung ermöglicht es, einen angeschalteten Hänger auch dann zu erkennen, wenn der Hängererkennungskontakt 97 bei einem älteren Hänger noch nicht vorgesehen ist und wenn andererseits sämtliche Lampen des Hängers in Betrieb sind. In diesem Falle fällt nämlich über den Lampen 82, 83 eine so hohe Spannung ab, daß die Dioden 94, 93 sperren und somit die Hängererkennungsleitung 30 nicht mehr Masse-Potential führt, sondern floated.

In dem in Fig. 8 gezeigten Ausführungsbeispiel sind weiterhin Rückfahrleuchten 114, 115 von Hänger und Zugfahrzeug angedeutet, die über einen Schalter 116 eingeschaltet werden können. Der Schalter 116 verbindet die Batterie 20 über einen Kontakt 117 mit einem Stromrelais 118, dessen Umschalter 119 in seiner in Fig. 8 gezeigten Ruhestellung die Batterie 20 mit der Rückfahrleuchte 115 des Zugfahrzeuges verbindet. Ist jedoch ein Hänger angeschlossen, so zieht das Relais 118 über den Kontakt 121, der über die Rückfahrleuchte 114 auf Masse gelegt wird, Strom und schaltet um. Bei gestecktem Hänger und bei geschlossenem Schalter 116 befindet sich das Stromrelais 118 also im geschalteten Zustand und statt der Rückfahrleuchte 115 des Zugfahrzeuges wird die Rückfahrleuchte 114 des Hängers betrieben. Diese einfache Schaltungsanordnung ist möglich, da Rückfahrleuchten nur sehr selten in Betrieb genommen werden. Eine zusätzliche Absicherung über eine Treiberschaltung 91 ist daher aus Kostengründen nicht vorgesehen. Eine entsprechende Schaltungsanordnung ist ebenfalls für die Nebelschlußleuchte vorgesehen, was jedoch aus Gründen der Übersichtlichkeit in Fig. 8 nicht zu erkennen ist.

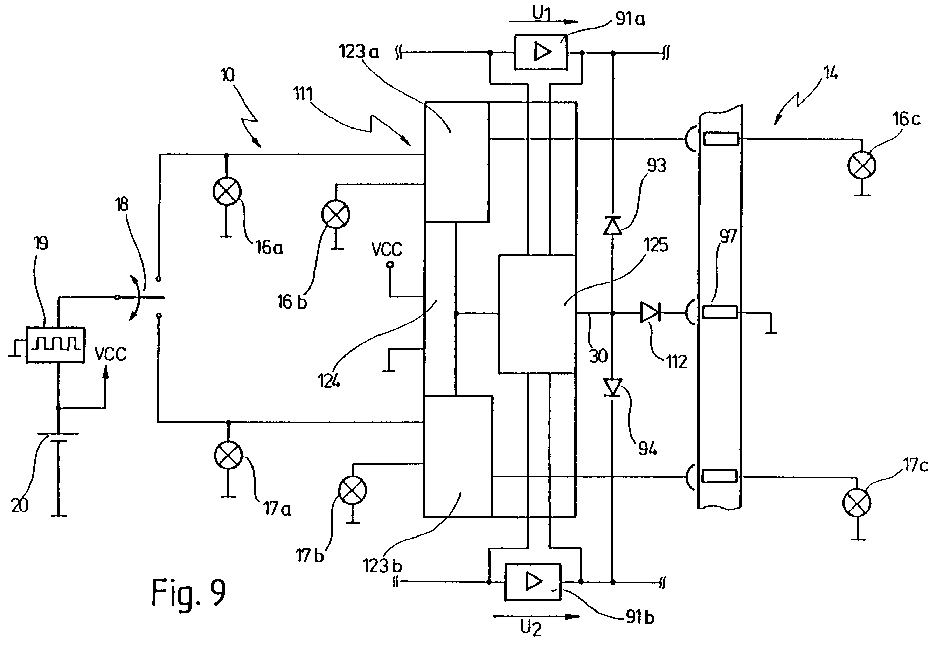

In Fig. 9 ist die Schaltungsanordnung 111 aus Fig. 8 detaillierter dargestellt. Es ist zu erkennen, daß die linken Lampen 16a, 16b und 16c der Blinklichtanlagen 10 und 14 über eine Umschalteinrichtung 123a betrieben werden, während die rechten Lampen 17a, 17b und 17c über eine entsprechende Umschalteinrichtung 123b miteinander verbunden sind. Über eine Leitung 124 sind die untereinander völlig identischen Umschalteinrichtungen 123a und 123 b mit einer Hängererkennungsschaltung 125 verbunden, die ihrerseits sowohl mit der Hängererkennungsleitung 30 als auch mit den Treiberschaltungen 91a und 91b verbunden ist. Anhand der Spannungsabfälle U1, U2 über den Treiberschaltungen 91a, 91b erkennt die Hängererkennungsschaltung 125, ob durch die zugeordneten Lampen 82, 83 ein Strom fließt. Selbst wenn die Hängererkennungsleitung 30 also nicht auf Masse gezogen ist, wodurch normalerweise ein Hänger erkannt wird, kann die Hängererkennungsschaltung 125 anhand der Spannungsabfälle U1, U2 einen Hänger erkennen. Wie dies geschieht, wird noch im einzelnen beschrieben werden.

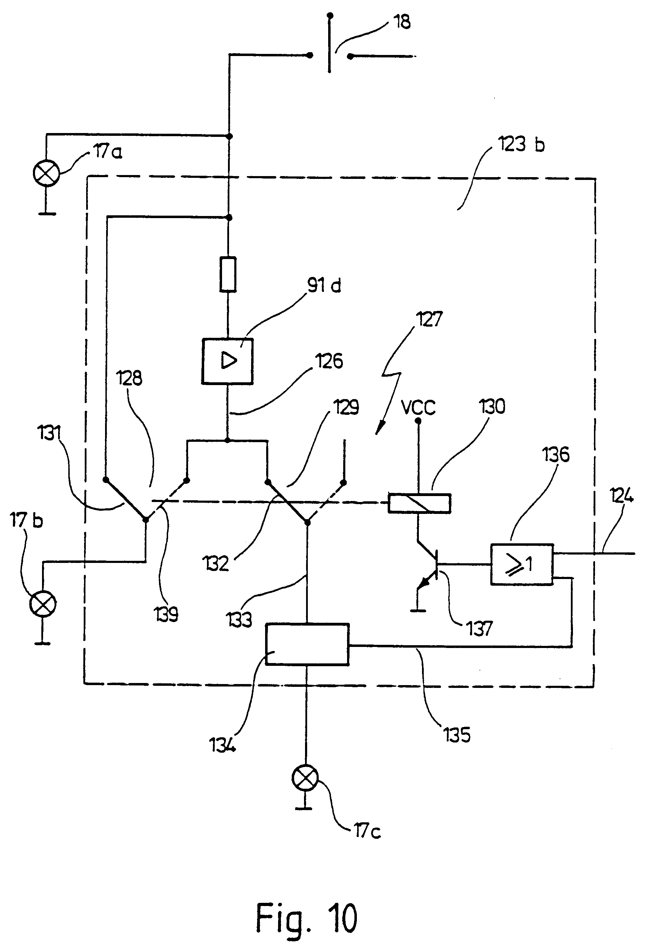

Eine der beiden Umschalteinrichtungen 123a, 123b ist in Fig. 10 genauer dargestellt. Aus Gründen der Übersichtlichkeit wurde auf die Darstellung der Umschalteinrichtung 123a, die zu der Umschalteinrichtung 123b identisch ist, verzichtet.

Die Umschalteinrichtung 123b weist eine Treiberschaltung 91d auf, die zu den übrigen Treiberschaltungen 91 identisch ist, also einen hochohmigen Eingang und einen kurzschlußfesten Ausgang aufweist. Der Ausgang der Treiberschaltung 91d ist über eine Ausgangsleitung 126 mit einem Relais 127 verbunden, und zwar genauer gesagt sowohl mit dessen Umschalter 128 als auch mit dessen Öffnungskontakt 129. Das Relais 127 wird durch eine bei 130 angedeutete Spule geschaltet, wobei selbstverständlich auch zwei getrennte Relais 127 verwendet werden können.

Der Umschalter 128 verbindet in seiner bei 131 durch eine durchgezogene Linie angedeuteten Ruhestellung die vordere Blinklampe 17a mit der hinteren Blinklampe 17b. Gleichzeitig geht von dem Fahrtrichtungsschalter 18 ebenfalls eine Leitung in die Treiberschaltung 91d hinein, so daß die Lampen 17a, 17b und die Treiberschaltung 91d zueinander parallel geschaltet sind. Wegen des hochohmigen Einganges der Treiberschaltung 91d wird der Blinkgeber dadurch jedoch nicht zusätzlich belastet.

Der Öffnungskontakt 129 verbindet in seiner bei 132 angedeuteten Ruhestellung die Ausgangsleitung 126 der Treiberschaltung 91d über eine Leitung 133 mit einer Fehlererkennungsschaltung 134, die somit bei in Ruhe befindlichem Relais 127 zwischen die Treiberschaltung 91d und die Lampe 17c der Blinklichtanlage 14 des Hängers geschaltet ist. In der in Fig. 10 gezeigten Ruhestellung des Relais 127 wird also die Lampe 17c über die Treiberschaltung 91d angesteuert.

Sollte in der Lampe 17c ein Fehlerzustand vorliegen, was im Leerlauffalle bedeutet, daß der Glühfaden gebrochen ist, so meldet die Fehlererkennungsschaltung 134 dies über ihre Ausgangsleitung 135 an ein NOR-Gatter 136. In den zweiten Eingang des NOR-Gatters 136 führt die Leitung 124, die von der Hängererkennungsschaltung 125 kommt. Mit seinem Ausgang treibt das NOR-Gatter 136 einen Schalttransistor 137, über den die Spule 130 des Relais 127 mit Strom beaufschlagt werden kann.

Das Relais 127 schaltet nur dann, wenn sowohl die Ausgangsleitung 135 als auch die Leitung 124 auf logisch L liegen. Wenn eine der beiden Leitungen 124, 135 auf logisch H liegen, bleibt das Relais 127 in seiner Ruhestellung. Die Leitung 124 ist solange auf H, solange kein Hänger an die Interface-Schaltung 75' angeschaltet ist. Wurde jedoch ein Hänger gesteckt, so geht Leitung 124 auf logisch L.

Die Ausgangsleitung 135 geht immer dann auf logisch L, wenn die Lampe 17c entweder Leerlauf aufweist oder aber gar nicht vorhanden ist, weil kein Hänger gesteckt wurde.

Weist die Lampe 17c einen Glühfadenbruch auf, so ist folglich die Ausgangsleitung 135 auf L und wegen des gesteckten Hängers ist ebenfalls Leitung 124 auf logisch L, so daß das Relais 127 umschaltet. Die Lampe 17b des Zugfahrzeuges wird jetzt über den in seiner bei 139 angedeuteten Arbeitsstellung befindlichen Umschalter 128 mit der Ausgangsleitung 126 der Treiberschaltung 91d verbunden, während gleichzeitig der Öffnungskontakt 129 die Fehlererkennungsschaltung 134 von der Leitung 126 abschaltet. Obwohl immer noch beide Lampen 17a, 17b des Zugfahrzeuges blinken, erkennt der Blinkgeber eine veränderte Stromaufnahme und zeigt durch geänderte Blinkfrequenz an, daß eine Blinklampe ausgefallen ist.

Die Ausgangsleitung 135 geht zwar auch dann auf logisch L, wenn gar keine Lampe 17c vorhanden ist, in diesem Falle ist die Leitung 124 jedoch von der Hängererkennungsschaltung 125 auf logisch H geschaltet worden, so daß das NOR-Gatter 136 verriegelt ist und das Relais 127 in Ruhestellung bleibt.

Auf die geschilderte Weise wird sichergestellt, daß das Relais 127 lediglich dann schaltet, wenn bei einem gesteckten Hänger ein Glühfadenbruch einer angesteuerten Lampe vorliegt. Auf diese Weise wird die Stromaufnahme durch die neue Schaltungsanordnung 111 deutlich reduziert.

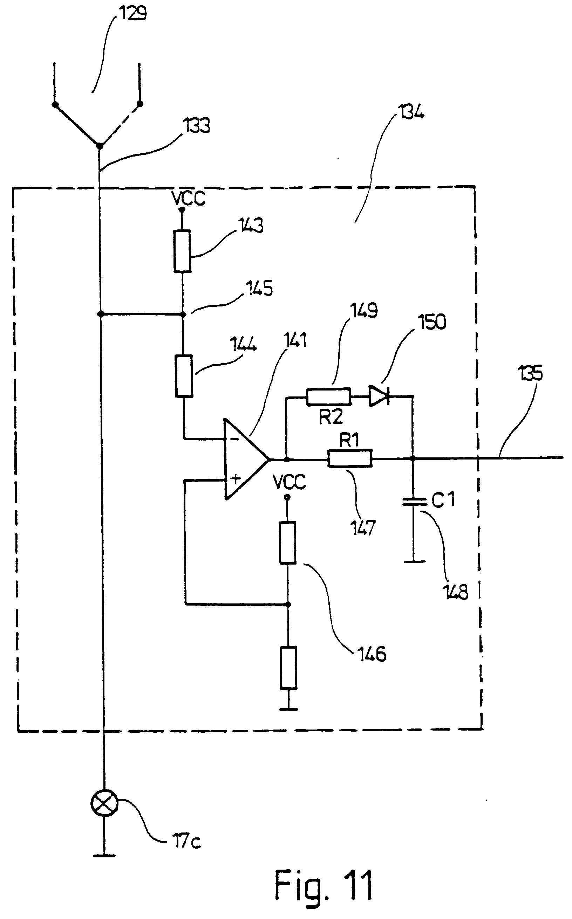

Die Funktionsweise der Fehlererkennungsschaltung 134 wird jetzt unter Zuhilfenahme von Fig. 11 erläutert. Die Fehlererkennungsschaltung 134 weist einen Operationsverstärker 141 auf, dessen invertierender Eingang über eine Reihenschaltung aus zwei Widerständen 143 und 144 auf VCC gelegt ist. Über ihren Mittenabgriff 145 sind die beiden Widerstände 143, 144 mit der Leitung 133 verbunden, die - wie Fig. 11 zeigt - durch die Fehlererkennungsschaltung 134 lediglich durchgeschleift ist und den Öffnungskontakt 129 mit der Lampe 17c des Hängers verbindet.

Der nicht-invertierende Eingang des Operationsverstärkers 141 ist mit dem Mittenabgriff eines Spannungsteilers 146 verbunden, der den nicht-invertierenden Eingang mit einer Referenzspannung versorgt, die deutlich geringer ist als VCC. In dem gezeigten Beispiel ist die Referenzspannung ca. ein Viertel von VCC.

Der Operationsverstärker 141 weist an seinem Ausgang einen mit 147 bezeichneten Längswiderstand R1 auf, an den sich ein mit 148 bezeichneter Kondensator C1 anschließt, der mit seinem zweiten Bein auf Masse gelegt ist. Parallel zu dem Widerstand R1 liegt eine Reihenschaltung aus einem mit 149 bezeichneten zweiten Widerstand R2 und einer Diode 150, die mit ihrer Anode mit dem Widerstand R2 verbunden ist. Die Anordnung ist derart, daß der Kondensator C1 über die Parallelschaltung von R1 und R2 geladen wird, während er lediglich über den Widerstand R1 entladen wird.

Da der Widerstand R2 sehr viel kleiner ist als der Widerstand R1 erfolgt das Laden des Kondensators C1 in erheblich kürzerer Zeit als das Entladen. Der Kondensator C1 wirkt somit wie ein Integrierglied, das kurzfristige auch periodische Änderungen am Ausgang des Operationsverstärkers 141 kompensiert.

An dem invertierenden Eingang des Operationsverstärkers 141 können drei verschiedene Betriebszustände eintreten:
Im ersten Fall ist die Lampe 17c in Ordnung, aber nicht angesteuert. Hier wird der Mittenabgriff 145 durch die Lampe 17c auf Masse gezogen, so daß das Potential des invertierenden Einganges unterhalb des Potentials des nicht-invertierenden Einganges des Operationsverstärkers 141 gelangt, der Ausgang des Operationsverstärkers 191 geht auf logisch H, der Kondensator C1 wird aufgeladen und die Ausgangsleitung 135 geht ebenfalls auf H.

Im zweiten Falle ist die Lampe 17c ebenfalls in Ordnung, wird jedoch periodisch von dem Blinkgeber über den Öffnungskontakt 129 mit Strom versorgt. Das Taktverhältnis der Ein- und Auszeiten des Blinkgebers ist ungefähr 1:1, so daß der Mittenabgriff 145 für gleiche Zeitdauern auf logisch L und auf logisch H geschaltet ist. Auch der Ausgang des Operationsverstärkers 141 geht jetzt abwechselnd auf logisch H und auf logisch L, da das Aufladen des Kondensators C1 jedoch erheblich schneller geht als das Entladen - siehe obige Beschreibung - bleibt das Signal auf der Ausgangsleitung 135 auf logisch H.

Im dritten Fall ist entweder die Lampe 17c defekt oder aber es ist gar keine Lampe 17c vorhanden. In diesem Falle bleibt der Mittenabgriff 145 immer auf logisch H, so daß sich wegen des nun auf logisch L liegenden Ausganges des Operationsverstärkers 145 der Kondensator C1 mit der Zeitkonstante T = R1C1 entlädt und schließlich die Ausgangsleitung 135 auf logisch L geht.

Wie bereits erwähnt, führt dies bei einem Leerlaufzustand der Lampe 17c dazu, daß das Relais 127 den Öffnungskontakt 129 umschaltet, wodurch sich jedoch an den Spannungsverhältnissen am invertierenden Eingang des Operationsverstärkers 141 nichts ändert, dieser wird weiterhin über die Widerstände 143, 144 auf VCC gehalten.

Ist jedoch gar kein Hänger gesteckt, hat also die Fehlererkennungsschaltung 134 nicht einen Leerlaufzustand, sondern das völlige Fehlen einer Lampe 17c erkannt, so kann das Relais 127 nicht schalten, denn das NOR-Gatter 136 ist über die Leitung 124 verriegelt, die auf logisch H liegt.

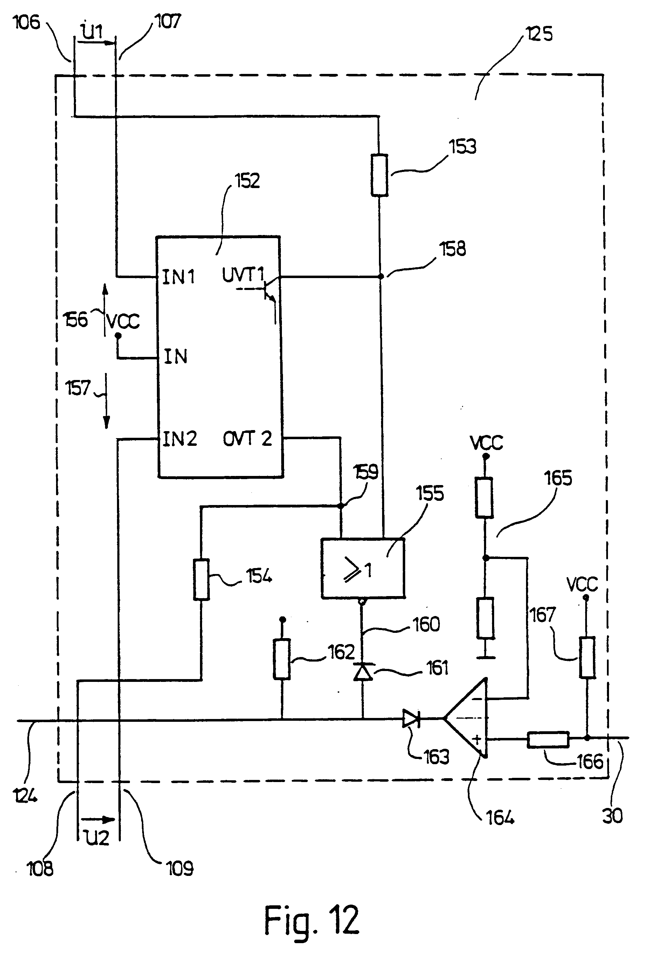

In Fig. 12 schließlich ist die Hängererkennungsschaltung 125 schaltungstechnisch ausgeführt dargestellt. Die Hängererkennungsschaltung 125 weist zunächst eine Komparatorschaltung 152 auf, wie sie beispielsweise unter der Typenbezeichnung U479B oder U4790 im Handel erhältlich ist. Über die Meßleitungen 107 und 109 sind die Ausgänge der Treiberschaltungen 91a und 91b mit Eingängen IN1 und IN2 der Komparatorschaltung 152 verbunden. Die mit den Eingängen der Treiberschaltungen 91a, 91b verbundenen Meßleitungen 106 und 108 führen über Längswiderstände 153 und 154 zu den zugeordneten Ausgängen OUT1 und OUT2 der Komparatorschaltung 152. Die am Ausgang der jeweiligen Treiberschaltung 91a, 91b anstehende Spannung wird über den Eingang IN mit VCC verglichen. Die so zwischen VCC und den Ausgängen der Treiberschaltungen 91a, 91b gebildeten Differenzspannungen sind bei 156 und 157 durch Pfeile angedeutet.

Die innere Beschaltung der Komparatorschaltung 152 ist derart, daß die Ausgänge OUT1 und OUT2, die Open-Collector-Ausgänge sind, nur dann sperren, wenn die Spannungen 156, 157 größer als 8 mV sind. In allen anderen Fällen ist der Ausgangstransistor bei OUT1 und OUT2 durchgeschaltet, so daß die Ausgänge OUT1 und OUT2 auf logisch L liegen.

Im folgenden wird die Funktionsweise anhand der Fig. 8 und 12 weiter erläutert. Liegt an der Lampe 86 eine Steuerspannung 90 an, so gelangt diese über die Meßleitung 106 und den Längswiderstand 153 in den Ausgang OUT1 hinein. Ist an den Ausgang der Treiberschaltung 91a eine Lampe 83 des Hängers angeschlossen, so fällt über der Treiberschaltung 91a eine Spannung U1 ab, was dazu führt, daß die Spannung 156 den Ausgangstransistor des Ausgangs OUT1 sperrt, so daß der Ausgang OUT1 auf logisch H geht. Ist keine Lampe 83 angeschlossen oder wird die Lampe 86 nicht angesteuert, so bleibt der Ausgang OUT1 auf logisch L. Entsprechendes gilt für Eingang IN2 und Ausgang OUT2. Die beiden Ausgänge OUT1 und OUT2 sind über ihre Verbindungspunkte 158 und 159 mit den Längswiderständen 153 und 154 mit Eingängen eines NOR-Gatters 155 verbunden.

Aufgrund des soeben Erklärten ergibt sich, daß das NOR-Gatter 155 an seinem Ausgang 160 logisch L-Potential führt, wenn zumindest über der Treiberschaltung 91a oder über der Treiberschaltung 91b eine Spannung U1 bzw. U2 abfällt. An dem Ausgang 160 ist also zu erkennen, ob die Lampen 82 und/oder 83 von Strom durchflossen sind. Immer dann, wenn zumindest eine Lampe 82 oder 83 stromdurchflossen ist, ist der Ausgang 160 auf logisch L.

Der Ausgang 160 ist über eine Diode 161 mit der Leitung 124 verbunden, wobei die Diode 161 mit ihrer Anode an die Leitung 124 angeschaltet ist. Über einen Widerstand 162 ist die Leitung 124 ebenfalls mit VCC verbunden, so daß die Leitung 124 nur dann L-Potential führt, wenn beispielsweise der Ausgang 160 auf logisch L ist, wenn also über den Betriebsstrom einer Hängerlampe ein angeschlossener Hänger erkannt wurde.

Fließt jedoch durch beide Lampen 82 und 83 kein Strom, so geht der Ausgang 160 auf logisch H. Um dennoch den angeschlossenen Hänger erkennen zu können, ist über eine weitere Diode 163, die mit ihrer Anode mit der Anode der Diode 161 zusammengeschaltet ist, ein weiterer Operationsverstärker 164 vorgesehen, dessen Ausgang mit der Kathode der Diode 163 verbunden ist. Der invertierende Eingang des Operationsverstärkers 164 wird über einen Spannungsteiler 165 mit einer Spannung versorgt, die deutlich geringer ist als VCC. Der nicht-invertierende Eingang ist über einen Längswiderstand 166 und einen Pull-up-Widerstand 167 mit VCC verbunden. Auf den gemeinsamen Verbindungspunkt der Widerstände 166 und 167 führt die Hängererkennungsleitung 30, die - wie bereits oben beschrieben - immer dann auf logisch L geschaltet ist, wenn ein Hänger angeschaltet wurde. In einem solchen Falle geht der Ausgang des Operationsverstärkers 164 ebenfalls auf logisch L, was über die Diode 163 auf die Leitung 124 weitergegeben wird.

Ist jedoch kein Hänger angeschaltet, so ist die Hängererkennungsleitung 30 wegen des Pull-up-Widerstandes 167 auf logisch H und über den Operationsverstärker 164 und die Diode 163 nimmt wegen des weiteren Pull-up-Widerstandes 162 die Leitung 124 ebenfalls den Wert logisch H. In einem solchen Falle kann nämlich auch der Ausgang 160 des NOR-Gatters 155 nicht auf logisch L gehen, denn wegen der fehlenden Lampen 82, 83 kann es nicht zu einem Spannungsabfall U1 bzw. U2 kommen.

Die Beschaltung mit dem Komparator 152 ermöglicht es nun, auch dann sicher einen Hänger zu erkennen, wenn sämtliche über Dioden 93, 94 abgefragten Lampen 82, 83 des Hängers mit Strom beaufschlagt sind. In diesem Falle führt zwar die Hängererkennungsleitung 30 H-Potential, so daß die Diode 163 sperrt, aber wegen der Spannungsabfälle U1 und U2 geht der Ausgang 160 des NOR-Gatters 155 auf logisch L, was über die Leitung 124 an das NOR-Gatter 136 aus Fig. 10 weitergegeben wird. Das NOR-Gatter 136 ist also freigegeben. Sollte die Fehlererkennungsschaltung 134 jetzt einen Glühfadenbruch in einer angesteuerten Lampe der Blinklichtanlage 14 des Hängers erkennen, so geht ebenfalls die Ausgangsleitung 135 auf logisch L und das Relais 127 schaltet in beschriebener Weise um.

## Patentansprüche

1. Schaltungsanordnung für ein Zugfahrzeug eines aus dem Zugfahrzeug und einem Hänger bestehenden Wagenzuges, wobei das Zugfahrzeug einen Blinkgeber (19) und einen Fahrtrichtungsschalter (18) zum Betreiben seiner Blinklichtanlage (10) aufweist, die über die Schaltungsanordnung (11) mit einer Blinklichtanlage (14) des Hängers verbindbar ist, und wobei ferner der Blinkgeber (19) derart zum Betreiben von zumindest zwei Lampen (16a, 16b; 17a, 17b) je Fahrtrichtung ausgelegt ist, daß er bei einem Leerlaufzustand zumindest einer der durch den Fahrtrichtungsschalter (18) jeweils auszuwählenden Lampen (16a, 16b; 17a, 17b) einen solchen Fehlerzustand erkennt und dies einem Fahrzeugführer anzeigt, wobei die Schaltungsanordnung (11) zum Erfassen eines Fehlerzustandes einer vom Fahrtrichtungsschalter (18) ausgewählten Lampe (16c, 17c) der Blinklichtanlage (14) des Hängers ausgelegt ist und dem Blinkgeber (19) den Leerlaufzustand einer von dem Fahrtrichtungsschalter (18) ausgewählten Lampe (16c, 17c) der Blinklichtanlage (14) des Hängers als Fehlerzustand übermittelt, dadurch gekennzeichnet, daß sie eine Umschalteinrichtung (32, 33, 34, 46; 123a, 123b) aufweist, die wahlweise die Lampen (16c, 17c) der Blinklichtanlage (14) des Hängers oder die hinteren Lampen (16b, 17b) der Blinklichtanlage (10) des Zugfahrzeuges mit dem Fahrtrichtungsschalter (18) verbindet.

2. Schaltungsanordnung nach Anspruch 1, dadurch gekennzeichnet, daß die Umschalteinrichtung (32, 33, 34, 46) bei mit der Schaltungsanordnung (11) verbundener Blinklichtanlage (14) des Hängers die Lampen (16c, 17c) der Blinklichtanlage (14) unmittelbar mit dem Fahrtrichtungsschalter (18) verbindet und die beiden hinteren Lampen (16b, 17b) der Blinklichtanlage (10) des Zugfahrzeuges je über eine zugeordnete Verstärkerschaltung (46) betreibt.

3. Schaltungsanordnung nach Anspruch 2, dadurch gekennzeichnet, daß sie eine Hängererkennungsschaltung (28, 29, 30; 98, 30) aufweist, die eine mit der Schaltungsanordnung (11) verbundene Blinklichtanlage (14) eines Hängers erkennt und die Lampen (16c, 17c) der Blinklichtanlage (14) unmittelbar mit dem Fahrtrichtungsschalter (18) verbindet.

4. Schaltungsanordnung nach einem der Ansprüche 1 bis 3, dadurch gekennzeichnet, daß sie eine Fehlererkennungsschaltung (53) aufweist, die bei mit der Schaltungsanordnung (11) verbundener Blinklichtanlage (14) des Hängers einen Fehlerzustand einer angesteuerten hinteren Lampe (16b, 17b) des Zugfahrzeuges erkennt.

5. Schaltungsanordnung nach Anspruch 4, dadurch gekennzeichnet, daß die Fehlererkennungsschaltung (53) bei einem Fehlerzustand einer angesteuerten hinteren Lampe (16b, 17b) eine Verstärkerschaltung (46) zwischen den Fahrtrichtungsschalter (18) und die der defekten hinteren Lampe (16b, 17b) zugeordnete Lampe (16c, 17c) der Blinklichtanlage (14) des Hängers schaltet.

6. Schaltungsanordnung nach den Ansprüchen 2 bis 5, dadurch gekennzeichnet, daß die Verstärkerschaltung (46) zum Betreiben der Lampen (16c, 17c) der Blinklichtanlage (14) des Hängers die Verstärkerschaltung (46) zum Betreiben der hinteren Lampen (16b, 17b) der Blinklichtanlage (10) des Zugfahrzeuges ist.

7. Schaltungsanordnung nach einem der Ansprüche 2 bis 6, dadurch gekennzeichnet, daß die Umschalteinrichtung (32, 33, 34, 46) ein Relais (32a, 32b) mit einem Umschalter (33) aufweist, der in seiner Ruhestellung (35) die hinteren Lampen (16b, 17b) unmittelbar mit dem Fahrtrichtungsschalter (18) verbindet, und der in seiner Arbeitsstellung (41) den Fahrtrichtungsschalter (18) über eine Verstärkerschaltung (46) mit den hinteren Lampen (16b, 17b) verbindet, wobei das Relais (32) ferner einen Schließkontakt (34) umfaßt, der in seiner Arbeitsstellung (42) die Lampen (16c, 17c) der Blinklichtanlage (14) des Hängers unmittelbar mit dem Fahrtrichtungsschalter (18) verbindet.

8. Schaltungsanordnung nach den Ansprüchen 3 und 7, dadurch gekennzeichnet, daß das Relais (32) über die Hängererkennungsschaltung (28, 29, 30; 98, 30) angesteuert ist, wobei sich das Relais (32) in seiner den Ruhestellungen (35, 36) von Umschalter (33) und Schließkontakt (34) zugeordneten Ruhestellung befindet, wenn die Blinklichtanlage (14) des Hängers von der Schaltungsanordnung (11) abgeschaltet ist.

9. Schaltungsanordnung nach Anspruch 8, dadurch gekennzeichnet, daß das Relais (32) mit seiner Spule einerseits mit einer Betriebsspannung (21) des Zugfahrzeuges verbunden ist und andererseits über die Hängererkennungsschaltung (28, 29, 30; 98, 30) auf Masse gelegt ist, wenn die Blinklichtanlage (14) des Hängers mit der Schaltungsanordnung (11) verbunden ist.

10. Schaltungsanordnung nach Anspruch 9, dadurch gekennzeichnet, daß die Hängererkennungsschaltung (28, 29, 30; 98, 30) eine Parallelschaltung von Dioden (28, 29) aufweist, deren Anoden mit dem Relais verbunden sind, und deren Kathoden bei mit der Schaltungsanordnung (11) verbundener Blinklichtanlage (14) des Hängers über die Lampen (16c, 17c) des Hängers auf Masse gelegt sind.

11. Schaltungsanordnung nach Anspruch 9, dadurch gekennzeichnet, daß zwischen ihr und der Blinklichtanlage (14) des Hängers eine Übergabeeinrichtung (12, 13) vorgesehen ist, die einen Hängererkennungskontakt (97) aufweist, über den das Relais (32) mit Masse verbindbar ist.

12. Schaltungsanordnung nach Anspruch 9, dadurch gekennzeichnet, daß die Hängererkennungsschaltung (28, 29, 30; 98, 30) eine Treiberschaltung (98) umfaßt, die über eine Parallelschaltung von mit den Lampen (16c, 17c) des Hängers verbindbaren Dioden (28, 29) angesteuert ist.

13. Schaltungsanordnung nach einem der Ansprüche 4 bis 12, dadurch gekennzeichnet, daß die Fehlererkennungsschaltung (53) die Ströme durch eine hintere Lampe (16b, 17b) der Blinklichtanlage (10) des Zugfahrzeuges und durch eine Lampe (16c, 17c) der Blinklichtanlage (14) des Hängers je Fahrtrichtung vergleicht und aus diesem Vergleich einen Fehlerzustand in einer angesteuerten hinteren Lampe (16b, 17b) des Zugfahrzeuges erkennt.

14. Schaltungsanordnung nach Anspruch 1, dadurch gekennzeichnet, daß die Umschalteinrichtung (123a, 123b) bei mit der Schaltungsanordnung (111) verbundener Blinklichtanlage (14) des Hängers die Lampen (16c, 17c) der Blinklichtanlage (14) je über eine zugeordnete hochohmige Verstärkerschaltung (91d) betreibt.

15. Schaltungsanordnung nach Anspruch 1 oder Anspruch 14, dadurch gekennzeichnet, daß sie eine Hängererkennungsschaltung (125) aufweist, die eine mit der Schaltungsanordnung (111) verbundene Blinklichtanlage (14) eines Hängers erkennt und an die Umschalteinrichtung (123a, 123b) meldet.

16. Schaltungsanordnung nach einem der Ansprüche 14 oder 15, dadurch gekennzeichnet, daß die Umschalteinrichtung (123a, 123b) eine Fehlererkennungsschaltung (134) aufweist, die bei mit der Schaltungsanordnung (111) verbundener Blinklichtanlage (14) des Hängers einen Fehlerzustand einer angesteuerten Lampe (16c, 17c) der Blinklichtanlage (14) erkennt.

17. Schaltungsanordnung nach Anspruch 16, dadurch gekennzeichnet, daß die Fehlererkennungsschaltung (134) bei einem Fehlerzustand einer angesteuerten hinteren Lampe (16c, 17c) der Blinklichtanlage (14) eine Verstärkerschaltung (91d) zwischen den Fahrtrichtungsschalter (18) und die der defekten Lampe (16c, 17c) zugeordnete hintere Lampe (16b, 17b) der Blinklichtanlage (10) des Zugfahrzeuges schaltet.

18. Schaltungsanordnung nach Anspruch 17, dadurch gekennzeichnet, daß die Verstärkerschaltung (91d) zum Betreiben der Lampen (16c, 17c) der Blinklichtanlage (14) des Hängers die Verstärkerschaltung (91d) zum Betreiben der hinteren Lampen (16b, 17b) der Blinklichtanlage (10) des Zugfahrzeuges ist.

19. Schaltungsanordnung nach einem der Ansprüche 14 bis 18, dadurch gekennzeichnet, daß die Umschalteinrichtung (123a, 123b) ein Relais (127) mit einem Umschalter (128) aufweist, der in seiner Ruhestellung (131) die hinteren Lampen (16b, 17b) unmittelbar mit dem Fahrtrichtungsschaltung (18) verbindet, und der in seiner Arbeitsstellung (139) den Fahrtrichtungsschalter (18) über die Verstärkerschaltung (91d) mit den hinteren Lampen (16b, 17b) verbindet, wobei das Relais (127) ferner einen Öffnungskontakt (129) umfaßt, der in seiner geschlossenen Ruhestellung (132) die Lampen (16c, 17c) der Blinklichtanlage (14) des Hängers über die Verstärkerschaltung (91d) mit dem Fahrtrichtungsschalter (18) verbindet.

20. Schaltungsanordnung nach den Ansprüchen 15 und 19, dadurch gekennzeichnet, daß das Relais (127) über die Hängererkennungsschaltung (125) angesteuert ist, wobei sich das Relais (127) in seiner den Arbeitsstellungen (139) von Umschalter (128) und Schließkontakt (129) zugeordneten Arbeitsstellung befindet, wenn bei mit der Schaltungsanordnung (111) verbundener Blinklichtanlage (14) des Hängers die Fehlererkennungsschaltung (134) einen Leerlaufzustand einer angesteuerten Lampe (16c, 17c) der Blinklichtanlage (14) erkennt.

21. Schaltungsanordnung nach einem der Ansprüche 1 bis 20, dadurch gekennzeichnet, daß sie einer Interface-Schaltung (75) zugeordnet ist, die Lampen (84, 85, 86) einer Beleuchtungsanlage (76) des Zugfahrzeuges mit zugeordneten Lampen (81, 82, 83) einer Beleuchtungsanlage (77) des Hängers über Treiberschaltungen (91) verbindet, die von den einzelnen Lampen (84, 85, 86) des Zugfahrzeuges Signalspannungen (90) hochohmig abgreifen.

22. Schaltungsanordnung nach Anspruch 21, dadurch gekennzeichnet, daß die Treiberschaltungen (91) an ihrem Ausgang kurzschlußfest sind.

23. Schaltungsanordnung nach Anspruch 21 oder 22, dadurch gekennzeichnet, daß bei mit der Interface-Schaltung (75') verbundener Beleuchtungsanlage (77) die Hängererkennungsschaltung (125) mit Lampen (82, 83) der Beleuchtungsanlage (77) verbunden ist.

24. Schaltungsanordnung nach einem der Ansprüche 21 bis 23, dadurch gekennzeichnet, daß bei mit der Interface-Schaltung (75') verbundener Beleuchtungsanlage (77) des Hängers die Hängererkennungsschaltung (125) mit einem Hängererkennungskontakt (97) verbunden ist, der auf Masse liegt.

25. Schaltungsanordnung nach einem der Ansprüche 21 bis 24, dadurch gekennzeichnet, daß die Hängererkennungsschaltung (125) mit ausgewählten Treiberschaltungen (91a, 91b) verbunden ist, derart, daß sie einen Stromfluß durch die entsprechenden Lampen (82, 83) der Beleuchtungsanlage (77) erkennt.

26. Schaltungsanordnung nach Anspruch 25, dadurch gekennzeichnet, daß die Hängererkennungsschaltung (125) den Spannungsabfall über den Treiberschaltungen (91a, 91b) mißt.

27. Schaltungsanordnung nach einem der Ansprüche 16 bis 26, dadurch gekennzeichnet, daß die Fehlererkennungsschaltung (134) den Spannungsabfall über Lampen (16c, 17c) der Blinklichtanlage (14) des Hängers mißt.

28. Schaltungsanordnung nach Anspruch 27, dadurch gekennzeichnet, daß die Fehlererkennungsschaltung (134) ein Integrierglied (148) aufweist, derart, daß bei Blinken der Lampe (16c, 17c) der Blinklichtanlage (14) die Fehlererkennungsschaltung (134) auf ihrer Ausgangsleitung (135) ein konstantes Signal abgibt.

29. Schaltungsanordnung nach einem der Ansprüche 20 bis 28, dadurch gekennzeichnet, daß die Fehlererkennungsschaltung (134) und die Hängererkennungsschaltung (125) an ihren Ausgängen (135, 124) über eine Logikschaltung (136, 137) miteinander verknüpft sind, wobei die Logikschaltung (136, 137) in Abhängigkeit von den Signalen der Fehlererkennungsschaltung (134) und der Hängererkennungsschaltung (125) das Relais (127) einschaltet.

## Claims

1. Circuit arrangement for a tractor vehicle of a train set consisting of the tractor vehicle and a trailer, the tractor vehicle having a flasher unit (19) and a direction indicator switch (18) for operating its flashing indicator system (10) which is capable of being connected, through the circuit arrangement (11), to a flashing indicator system (14) of the trailer, and the flasher unit (19) furthermore being designed to operate at least two lamps (16a, 16b; 17a, 17b) for each direction of travel in such a way that, if at least one of the lamps (16a, 16b; 17a, 17b) to be selected by the direction indicator switch (18) in each case is in an open-circuit state, it detects such a fault condition and indicates this to a driver of the vehicle, the circuit arrangement (11) being designed to detect a fault condition of a lamp (16c, 17c) of the trailer flashing indicator system (14) selected by the direction indicator switch (18) and signalling to the flasher unit (19) as a fault condition the open-circuit state of a lamp (16c, 17c) of the trailer flashing indicator system (14) selected by the direction indicator switch (18), characterized in that it has a changeover device (32, 33, 34, 46; 123a, 123b) which optionally connects either the lamps (16c, 17c) of the trailer flashing indicator system (14) or the rear lamps (16b, 17b) of the tractor vehicle flashing indicator system (10) to the direction indicator switch (18).

2. Circuit arrangement according to Claim 1, characterized in that the changeover device (32, 33, 34, 46) connects the lamps (16c, 17c) of the flashing indicator system (14) directly to the direction indicator switch (18), when the trailer flashing indicator system (14) is connected to the circuit arrangement (11), and drives each of the two rear lamps (16b, 17b) of the tractor vehicle flashing indicator system (10) via an assigned amplifier circuit (46).

3. Circuit arrangement according to Claim 2, characterized in that it has a trailer detection circuit (28, 29, 30; 98, 30) which detects a trailer flashing indicator system (14) connected to the circuit arrangement (11) and connects the lamps (16c, 17c) of the flashing indicator system (14) directly to the direction indicator switch (18).

4. Circuit arrangement according to any one of Claims 1 to 3, characterized in that it has a fault detection circuit (53) which detects a fault condition of an activated rear lamp (16b, 17b) of the tractor vehicle when the trailer flashing indicator system (14) is connected to the circuit arrangement (11).

5. Circuit arrangement according to Claim 4, characterized in that, in the event of a fault condition of an activated rear lamp (16b, 17b), the fault detection circuit (53) switches an amplifier circuit (46) between the direction indicator switch (18) and the lamp (16c, 17c) of the trailer flashing indicator system (14) associated with the defective rear lamp (16b, 17b).

6. Circuit arrangement according to Claims 2 to 5, characterized in that the amplifier circuit (46) for operating the lamps (16c, 17c) of the trailer flashing indicator system (14) is the amplifier circuit (46) for operating the rear lamps (16b, 17b) of the tractor vehicle flashing indicator system (10).

7. Circuit arrangement according to any one of Claims 2 to 6, characterized in that the changeover device (32, 33, 34, 36) has a relay (32a, 32b) with a changeover switch (33) which, in its normal position (35), directly connects the rear lamps (16b, 17b) to the direction indicator switch (18) and, in its actuated position (41), connects the direction indicator switch (18) to the rear lamps (16b, 17b) via an amplifier circuit (46), the relay (32) also comprising a make contact (34) which, in its actuated position (42), directly connects the lamps (16c, 17c) of the trailer flashing indicator system (14) to the direction indicator switch (18).

8. Circuit arrangement according to Claims 3 and 7, characterized in that the relay (32) is activated through the trailer detection circuit (28, 29, 30; 98, 30), the relay (32) being in its normal position assigned to the normal positions (35, 36) of the changeover switch (33) and the make contact (34) when the trailer flashing indicator system (14) is disconnected from the circuit arrangement (11).

9. Circuit arrangement according to Claim 8, characterized in that the relay (32) is both connected to an operating voltage (21) of the tractor vehicle by its coil and connected to ground through the trailer detection circuit (28, 29, 30; 98, 30) when the trailer flashing indicator system (14) is connected to the circuit arrangement (11).

10. Circuit arrangement according to Claim 9, characterized in that the trailer detection circuit (28, 29, 30; 98, 30) has a parallel connection of diodes (28, 29) whose anodes are connected to the relay and whose cathodes are connected to ground through the trailer lamps (16c, 17c) when the trailer flashing indicator system (14) is connected to the circuit arrangement (11).

11. Circuit arrangement according to Claim 9, characterized in that there is provided between the circuit arrangement and the trailer flashing indicator system (14) a transfer device (12, 13) having a trailer detection contact (97) through which the relay (32) can be connected to ground.

12. Circuit arrangement according to Claim 9, characterized in that the trailer detection circuit (28, 29, 30; 98, 30) has a driver circuit (98) which is activated through a parallel connection of diodes (28, 29) which can be connected to the trailer lamps (16c, 17c).

13. Circuit arrangement according to any one of Claims 4 to 12, characterized in that the fault detection circuit (53) compares the currents through a rear lamp (16b, 17b) of the tractor vehicle flashing indicator system (10) and through a lamp (16c, 17c) of the trailer flashing indicator system (14) for each direction of travel and from this comparison detects a fault condition in an activated rear lamp (16b, 17b) of the tractor vehicle.

14. Circuit arrangement according to Claim 1, characterized in that the changeover device (123a, 123b) drives each of the lamps (16c, 17c) of the flashing indicator system (14) through an associated high-ohmic amplifier circuit (91d) when the trailer flashing indicator system (14) is connected to the circuit arrangement (111).

15. Circuit arrangement according to Claim 1 or Claim 14, characterized in that the circuit arrangement has a trailer detection circuit (125) which detects the connection of a trailer flashing indicator system (14) to the circuit arrangement (111) and signals this to the changeover device (123a, 123b).

16. Circuit arrangement according to either of Claims 14 or 15, characterized in that the changeover device (123a, 123b) has a fault detection circuit (134) which detects a fault condition of an activated lamp (16c, 17c) of the flashing indicator system (14) when the trailer flashing indicator system (14) is connected to the circuit arrangement (111).

17. Circuit arrangement according to Claim 16, characterized in that, in the event of a fault condition of an activated rear lamp (16c, 17c) of the flashing indicator system (14), the fault detection circuit (134) switches an amplifier circuit (91d) between the direction indicator switch (18) and the rear lamp (16b, 17b) of the tractor vehicle flashing indicator (10) system associated with the defective lamp (16c, 17c).

18. Circuit arrangement according to Claim 17, characterized in that the amplifier circuit (91d) for operating the lamps (16c, 17c) of the trailer flashing indicator system (14) is the amplifier circuit (91d) for operating the rear lamps (16b, 17b) of the tractor vehicle flashing indicator system (10).

19. Circuit arrangement according to any one of Claims 14 to 18, characterized in that the changeover device (123a, 123b) has a relay (127) with a changeover switch (128) which, in its normal position (131), directly connects the rear lamps (16b, 17b) to the direction indicator switch (18) and which, in its actuated position (139), connects the direction indicator switch (18) to the rear lamps (16b, 17b) through the amplifier circuit (91d), the relay (127) also comprising a break contact (129) which, in its closed normal position (132), connects the lamps (16c, 17c) of the trailer flashing indicator system (14) to the direction indicator switch (18) through the amplifier circuit (91d).

20. Circuit arrangement according to Claims 15 and 19, characterized in that the relay (127) is activated through the trailer detection circuit (125), the relay (127) being in its actuated position assigned to the actuated positions (139) of the changeover switch (128) and the make contact (129) when the fault detection circuit (134) detects an open-circuit state of an activated lamp (16c, 17c) of the flashing indicator system (14) when the trailer flashing indicator system (14) is connected to the circuit arrangement (111).

21. Circuit arrangement according to any one of Claims 1 to 20, characterized in that the circuit arrangement is assigned to an interface circuit (75) which connects lamps (84, 85, 86) of a tractor vehicle lighting system (76) to associated lamps (81, 82, 83) of a trailer lighting system (77) through high-ohmic driver circuits (91) which tap signal voltages (90) from the individual lamps (84, 85, 86) of the tractor vehicle.

22. Circuit arrangement according to Claim 21, characterized in that the outputs of the driver circuits (91) are short-circuit-proof.

23. Circuit arrangement according to either of Claims 21 or 22, characterized in that, when the lighting system (77) is connected to the interface circuit (75'), the trailer detection circuit (125) is connected to lamps (82, 83) of the lighting system (77).

24. Circuit arrangement according to any one of Claims 21 to 23, characterized in that, when the trailer lighting circuit (77) is connected to the interface circuit (75'), the trailer detection circuit (125) is connected to a trailer detection contact (97) which is connected to ground.

25. Circuit arrangement according to any one of Claims 21 to 24, characterized in that the trailer detection circuit (125) is connected to selected driver circuits (91a, 91b) in such a way that it detects a flow of current through the relevant lamps (82, 83) of the lighting system (77).

26. Circuit arrangement according to Claim 25, characterized in that the trailer detection circuit (125) measures the voltage drop through the driver circuits (91a, 91b).

27. Circuit arrangement according to any one of Claims 16 to 26, characterized in that the fault detection circuit (134) measures the voltage drop through lamps (16c, 17c) of the trailer flashing indicator system (14).

28. Circuit arrangement according to Claim 27, characterized in that the fault detection circuit (134) has an integrating element (148) such that, when the lamp (16c, 17c) of the flashing indicator system (14) is flashing, the fault detection circuit (134) emits a constant signal on its output line (135).

29. Circuit arrangement according to any one of Claims 20 to 28, characterized in that the fault detection circuit (134) and the trailer detection circuit (125) are linked together at their outputs (135, 124) through a logic circuit (136, 137), the logic circuit (136, 137) switching on the relay (127) in dependence on the signals of the fault detection circuit (134) and the trailer detection circuit (125).

## Revendications

1. Circuit pour un véhicule tracteur d'un ensemble roulant constitué par le véhicule tracteur et par une remorque, le véhicule tracteur étant équipé d'une centrale de clignotement (19) et d'une commande d'indicateurs de changement de direction (18) pour faire fonctionner son équipement de feux clignotants (10) qui peut être raccordé, par l'intermédiaire du circuit (11), à l'équipement de feux clignotants (14) de la remorque, la centrale de clignotement (19) étant en outre conçue pour faire fonctionner au moins deux feux clignotants (16a, 16b ; 17a, 17b) par direction de marche, de telle sorte que, en cas de circuit ouvert sur l'un au moins des feux clignotants (16a, 16b ; 17a, 17b) à sélectionner par la commande d'indicateurs de changement de direction (18), elle reconnaisse cet état de défaut et l'indique au conducteur du véhicule, le circuit (11) étant conçu pour détecter un état de défaut sur un feu (16c, 17c) de l'équipement de feux clignotants (14) de la remorque sélectionné par la commande d'indicateurs de changement de direction (18) et pour signaler à la centrale de clignotement (19), en tant qu'état de défaut, un circuit ouvert sur un feu (16c, 17c) de l'équipement de feux clignotants (14) de la remorque sélectionné par la commande d'indicateurs de changement de direction (18),
caractérisé en ce qu'il comporte un dispositif d'inversion (32, 33, 34, 46 ; 123a, 123b) qui relie à la commande d'indicateurs de changement de direction (18), au choix, les feux (16c, 17c) de l'équipement de feux clignotants (14) de la remorque, ou bien les feux arrière (16b, 17b) de l'équipement de feux clignotants (10) du véhicule tracteur.

2. Circuit selon la revendication 1, caractérisé en ce que le dispositif d'inversion (32, 33, 34, 46), lorsque l'équipement de feux clignotants (14) de la remorque est raccordé au circuit (11), relie les feux (16c, 17c) de l'équipement de feux clignotants (14) directement à la commande d'indicateurs de changement de direction (18) et fait fonctionner les deux feux arrière (16b, 17b) de l'équipement de feux clignotants (10) du véhicule tracteur par l'intermédiaire d'un circuit amplificateur (46) propre à chacun d'eux.

3. Circuit selon la revendication 2, caractérisé en ce qu'il comporte un circuit de détection de remorque (28, 29, 30 ; 98, 30) qui reconnaît la présence de l'équipement de feux clignotants (14) d'une remorque raccordé au circuit (11) et relie les feux (16c, 17c) de l'équipement de feux clignotants (14) directement à la commande d'indicateurs de changement de direction (18).

4. Circuit selon l'une quelconque des revendications 1 à 3, caractérisé en ce qu'il comporte un circuit de détection de défaut (53) qui, lorsque l'équipement de feux clignotants (14) de la remorque est raccordé au circuit (11), reconnaît un état de défaut d'un feu clignotant arrière commandé (16b, 17b) du véhicule tracteur.

5. Circuit selon la revendication 4, caractérisé en ce que le circuit de détection de défaut (53), en cas de défaut d'un feu clignotant arrière commandé (16b, 17b), met en fonctionnement un circuit amplificateur (46) entre la commande d'indicateurs de changement de direction (18) et le feu (16c, 17c) de l'équipement de feux clignotants (14) de la remorque qui correspond au feu clignotant arrière défectueux (16b, 17b).

6. Circuit selon l'une quelconque des revendications 2 à 5, caractérisé en ce que le circuit amplificateur (46) servant à faire fonctionner les feux (16c, 17c) de l'équipement de feux clignotants (14) de la remorque est le circuit amplificateur (46) qui sert à faire fonctionner les feux arrière (16b, 17b) de l'équipement de feux clignotants (10) du véhicule tracteur.

7. Circuit selon l'une quelconque des revendications 2 à 6, caractérisé en ce que le dispositif d'inversion (32, 33, 34, 36) comporte une relais (32a, 32b) à contact inverseur (33) qui, lorsqu'il est en position de repos (35), relie les feux clignotants arrière (16b, 17b) directement à la commande d'indicateurs de changement de direction (18) et, lorsqu'il est en position de travail (41), relie la commande d'indicateurs de changement de direction (18) aux feux clignotants arrière (16b, 17b) par l'intermédiaire d'un circuit amplificateur (46), le relais (32) comportant en outre un contact à fermeture (34) qui, lorsqu'il est en position de travail (42), relie les feux (16c, 17c) de l'équipement de feux clignotants (14) de la remorque directement à la commande d'indicateurs de changement de direction (18).

8. Circuit selon l'une ou l'autre des revendications 3 et 7, caractérisé en ce que le relais (32) est commandé par le circuit de détection de remorque (28, 29, 30 ; 98, 30), le relais (32) se trouvant dans sa position de repos correspondant aux positions de repos (35, 36) du contact inverseur (33) et du contact à fermeture (34), lorsque l'équipement de feux clignotants (14) de la remorque n'est plus raccordé au circuit (11).

9. Circuit selon la revendication 8, caractérisé en ce que la bobine du relais (32) est reliée d'une part à une tension d'alimentation (21) du véhicule tracteur et d'autre part à la masse, par l'intermédiaire du circuit de détection de remorque (28, 29, 30 ; 98, 30), lorsque l'équipement de feux clignotants (14) de la remorque est raccordé au circuit (11).

10. Circuit selon la revendication 9, caractérisé en ce que le circuit de détection de remorque (28, 29, 30 ; 98, 30) comporte un couplage parallèle de diodes (28,29), dont les anodes sont reliées au relais, et les cathodes reliées à la masse par l'intermédiaire des feux clignotants (16c, 17c) de la remorque, lorsque l'équipement de feux clignotants (14) de la remorque est raccordé au circuit (11).

11. Circuit selon la revendication 9, caractérisé en ce qu'il est prévu, entre lui et l'équipement de feux clignotants (14) de la remorque, un dispositif de transfert (12, 13) comportant un contact de détection de remorque (97), au moyen duquel le relais (32) peut être relié à la masse.

12. Circuit selon la revendication 9, caractérisé en ce que le circuit de détection de remorque (28, 29, 30 ; 98, 30) comporte un circuit d'attaque (98) qui est piloté par un couplage parallèle de diodes (28,29) pouvant être reliées aux feux clignotants (16c, 17c) de la remorque.

13. Circuit selon l'une quelconque des revendications 4 à 12, caractérisé en ce que le circuit de détection de défaut (53) compare le courant traversant un feu arrière (16b, 17b) de l'équipement de feux clignotants (10) du véhicule tracteur à celui qui traverse un feu (16c, 17c) de l'équipement de feux clignotants (14) de la remorque, en fonction de l'indication de changement de direction et détecte, à partir de cette comparaison, un état de défaut sur un feu clignotant arrière commandé (16b, 17b) du véhicule tracteur.

14. Circuit selon la revendication 1, caractérisé en ce que le dispositif d'inversion (123a, 123b), lorsque l'équipement de feux clignotants (14) de la remorque est raccordé au circuit (111), commande les feux (16c, 17c) de l'équipement de feux clignotants (14), par l'intermédiaire d'un circuit amplificateur haute impédance (91d) affecté à chacun d'eux.

15. Circuit selon l'une ou l'autre des revendications 1 et 14, caractérisé en ce qu'il comprend un circuit de détection de remorque (125) qui reconnaît un équipement de feux clignotants (14) d'une remorque raccordé au circuit (111) et qui le signale au dispositif d'inversion (123a, 123b).

16. Circuit selon l'une ou l'autre des revendications 14 et 15, caractérisé en ce que le dispositif d'inversion (123a, 123b) comporte un circuit de détection de défaut (134) qui, lorsque l'équipement de feux clignotants (14) de la remorque est raccordé au circuit (111), reconnaît un état de défaut sur un feu commandé (16c, 17c) de l'équipement de feux clignotants (14).

17. Circuit selon la revendication 16, caractérisé en ce que le circuit de détection de défaut (134), en cas d'état de défaut sur un feu arrière commandé (16c, 17c) de l'équipement de feux clignotants (14), met en fonctionnement un circuit amplificateur (91d) entre la commande d'indicateurs de changement de direction (18) et le feu arrière (16b, 17b) de l'équipement de feux clignotants (10) du véhicule tracteur qui correspond au feu clignotant défectueux (16c, 17c).

18. Circuit selon la revendication 17, caractérisé en ce que le circuit amplificateur (91d) servant à faire fonctionner les feux (16c, 17c) de l'équipement de feux clignotants (14) de la remorque est le circuit amplificateur (91d) qui sert à faire fonctionner les feux arrière (16b, 17b) de l'équipement de feux clignotants (10) du véhicule tracteur.

19. Circuit selon l'une quelconque des revendications 14 à 18, caractérisé en ce que le dispositif d'inversion (123a, 123b) comporte un relais (127) à contact inverseur (128) qui, lorsqu'il est en position de repos (131), relie les feux clignotants arrière (16b, 17b) directement à la commande d'indicateurs de changement de direction (18) et, lorsqu'il est en position de travail (139), relie la commande d'indicateurs de changement de direction (18) aux feux clignotants arrière (16b, 17b) par l'intermédiaire du circuit amplificateur (91d), le relais (127) comportant en outre un contact à ouverture (129) qui, lorsqu'il est en position fermée ou de repos (132), relie les feux (16c, 17c) de l'équipement de feux clignotants (14) de la remorque à la commande d'indicateurs de changement de direction (18), par l'intermédiaire du circuit amplificateur (91d).

20. Circuit selon les revendications 15 et 19, caractérisé en ce que le relais (127) est commandé par le circuit de détection de remorque (125), le relais (127) se trouvant dans sa position de travail correspondant aux positions de travail (139) du contact inverseur (128) et du contact à fermeture (129) lorsque, l'équipement de feux clignotants (14) de la remorque étant raccordé au circuit (111), le circuit de détection de défaut (134) détecte un circuit ouvert sur un feu commandé (16c, 17c) de l'équipement de feux clignotants (14).

21. Circuit selon l'une quelconque des revendications 1 à 20, caractérisé en ce qu'il lui est adjoint un circuit d'interface (75) qui relie les feux (84, 85, 86) d'un équipement d'éclairage (76) du véhicule tracteur aux feux correspondants (81, 82, 83) d'un équipement d'éclairage (77) de la remorque par l'intermédiaire de circuits d'attaque (91) qui captent des tensions de signal haute impédance (90) provenant des différents feux (84, 85, 86) du véhicule tracteur.

22. Circuit selon la revendication 21, caractérisé en ce que les circuits d'attaque (91) sont protégés en sortie contre les courts-circuits.

23. Circuit selon l'une ou l'autre des revendications 21 et 22, caractérisé en ce que, lorsque l'équipement d'éclairage (77) est raccordé au circuit d'interface (75'), le circuit de détection de remorque (125) est relié aux feux (82, 83) de l'équipement d'éclairage (77).

24. Circuit selon l'une quelconque des revendications 21 à 23, caractérisé en ce que, lorsque l'équipement d'éclairage (77) de la remorque est raccordé au circuit d'interface (75'), le circuit de détection de remorque (125) est relié à un contact de détection de remorque (97) qui est relié la masse.

25. Circuit selon l'une quelconque des revendications 21 à 24, caractérisé en ce que le circuit de détection de remorque (125) est relié de façon sélective à des circuits d'attaque (91a, 91b), de telle sorte qu'il détecte un passage de courant dans les feux correspondants (82, 83) de l'équipement d'éclairage (77).

26. Circuit selon la revendication 25, caractérisé en ce que le circuit de détection de remorque (125) mesure la chute de tension sur les circuits d'attaque (91a, 91b).

27. Circuit selon l'une quelconque des revendications 16 à 26, caractérisé en ce que le circuit de détection de défaut (134) mesure la chute de tension sur les feux (16c, 17c) de l'équipement de feux clignotants (14) de la remorque.

28. Circuit selon la revendication 27, caractérisé en ce que le circuit de détection de défaut (134) comporte un circuit intégrateur (148) de telle sorte que, lorsque le feu (16c, 17c) de l'équipement de feux clignotants (14) clignote, le circuit de détection de défaut (134) délivre un signal continu sur sa ligne de sortie (135).

29. Circuit selon l'une quelconque des revendications 20 à 28, caractérisé en ce que le circuit de détection de défaut (134) et le circuit de détection de remorque (125) sont combinés en sortie (135, 124) par un circuit logique (136, 137), ledit circuit logique (136, 137) faisant fonctionner le relais (127) en fonction des signaux provenant du circuit de détection de défaut (134) et du circuit de détection de remorque (125).
